# EUROPEAN PATENT APPLICATION

(11) **EP 4 845 111 A1**
(43) Date of publication of application: **25.11.2026**
(21) Application number: 25747753.9
(22) Date of filing: 23.01.2025
(51) Int. Cl.: H04L 27/26

(54) **COMMUNICATION METHOD AND APPARATUS**

(30) Priority: 04.02.2024 CN 202410161416
(71) Applicant: Huawei Technologies Co., Ltd., Shenzhen, Guangdong 518129 (CN)
(72) Inventor: WEN, Shan, Shenzhen, Guangdong 518129 (CN); HUANG, Huang, Shenzhen, Guangdong 518129 (CN)
(74) Representative: Huawei European IPR
(86) International application number: PCT/CN2025/074338
(87) International publication number: WO 2025/162184

(57) **Abstract**

This application provides a communication method and apparatus, relating to the field of communication technologies. A transmitter obtains an orthogonal frequency division multiplexing OFDM signal, where the OFDM signal is obtained by preprocessing a symbol sequence. The preprocessing includes frequency domain spectrum shaping FDSS and first processing, where the first processing extends the symbol sequence to obtain an extended sequence, and the first processing is performed before the FDSS. The transmitter outputs the OFDM signal. A receiver receives the OFDM signal and demodulates the OFDM signal to obtain the symbol sequence. In this application, the symbol sequence is extended through the first processing to obtain the extended sequence, and after FDSS processing is performed on the extended sequence, subsequent operations such as subcarrier mapping and inverse Fourier transform are performed to obtain the OFDM signal. In ISAC scenarios, the OFDM signal improves performance of detecting a to-be-sensed target while ensuring demodulation performance of communication signals.

## Description

### CROSS-REFERENCE TO RELATED APPLICATIONS

This application claims priority to Chinese Patent Application No. 202410161416.5, filed with the China National Intellectual Property Administration on February 4, 2024 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In wireless sensing technology, characteristics of a signal propagation space (channel) are obtained by analyzing variations of wireless signals during propagation, thereby enabling environmental sensing. Integrated sensing and communications (integrated sensing and communications, ISAC) integrates communication and sensing functions, allowing future communication systems to support both the communication and sensing functions. During information transmission through a radio channel, physical characteristics of the ambient environment can be sensed by analyzing channel characteristics, thereby implementing enhancement of both the communication and sensing functions.

An ISAC transmitter transmits a signal to a to-be-sensed target. After the signal is reflected by the target, an echo signal is generated and received by an ISAC receiver. A range profile is obtained by performing time-domain or frequency-domain digital signal processing on the echo signal and the transmitted signal. Then, a delay estimate is obtained by searching for a peak in the range profile, and finally, the distance to the to-be-sensed target is determined based on the delay estimate.

Frequency domain spectrum shaping (frequency domain spectrum shaping, FDSS) can be used to improve performance of detecting targets (especially weak targets whose echo signals have low power). However, the introduction of FDSS may degrade the communication demodulation performance of ISAC.

### SUMMARY

This application provides a communication method and apparatus to improve ISAC communication demodulation performance while ensuring performance of detecting a target.

According to a first aspect, this application provides a communication method. The method may be performed by a transmitter. Unless otherwise specified, in this application, the transmitter may be a transmitter (for example, a network device or a terminal device), or may be a component (for example, a processor, a chip, or a chip system) in a transmitter, or may be a logical module or software that implements all or some functions of a transmitter. This is not specifically limited in this application.

The method may be applied to the 5th generation (the 5th generation, 5G) communication system or a communication system above 5G, or may be applied to a non-terrestrial communication system. This is not specifically limited in this application. The method is performed as follows:
obtaining an orthogonal frequency division multiplexing (orthogonal frequency division multiplexing, OFDM) signal, where the OFDM signal is obtained by preprocessing a symbol sequence, the preprocessing includes FDSS and first processing, the first processing extends the symbol sequence to obtain an extended sequence, and the first processing is performed before FDSS; and outputting the OFDM signal.

OFDM is one of the waveforms currently used in 4G and 5G systems. To ensure uplink coverage, uplink transmission in the current 4G and 5G systems also supports discrete Fourier transform spread orthogonal frequency division multiplexing (DFT spread OFDM, DFT-s-OFDM), which exhibits characteristics of a single-carrier waveform and has a peak-to-average power ratio (peak-to-average power ratio, PAPR) significantly lower than that of a multi-carrier waveform such as OFDM. In an ISAC scenario, a single-carrier waveform or a waveform with single-carrier characteristics (for example, DFT-s-OFDM) is recommended for sensing according to research. However, due to a non-constant modulus of a frequency domain signal, sensing performance is degraded. In contrast, a multi-carrier OFDM waveform can achieve a constant-modulus frequency domain signal, for example, by using subcarriers to carry phase-shift keying symbols.

In this application, the OFDM signal is obtained by performing processing such as the first processing and FDSS on the symbol sequence. The extended sequence is obtained after the first processing is performed on the symbol sequence, and a length of the extended sequence is greater than a length of the symbol sequence. Therefore, redundancy is introduced to the symbol sequence after the first processing. After FDSS processing is performed on the extended sequence, subsequent operations such as subcarrier mapping and inverse Fourier transform are performed to obtain the OFDM signal. Based on the OFDM signal, in the ISAC scenario, FDSS can improve performance of detecting a to-be-sensed target, and the first processing can alleviate a loss of communication demodulation performance of the OFDM signal caused by FDSS.

In an optional manner, the preprocessing further includes performing a cyclic shift on the symbol sequence, where the cyclic shift is performed before the first processing.

In this application, an appropriate cyclic shift helps improve demodulation performance of the OFDM signal.

In an optional manner, the first processing extending the symbol sequence to obtain the extended sequence includes extending the symbol sequence of length M based on an extension length L to obtain the extended sequence of length (M+L), where both M and L are positive integers, and L does not exceed M.

In an optional manner, *L* is determined based on at least one of the following:
a modulation and coding scheme (modulation and coding scheme, MCS) corresponding to the OFDM signal, M, or a first factor *θ*, where a value of the first factor is related to a window function of FDSS.

Determining *L* based on the parameters can balance a degree of redundancy introduced to the symbol sequence and an increase degree of a coding code rate, thereby improving the communication demodulation performance of the OFDM signal.

In an optional manner, the first processing extending the symbol sequence to obtain the extended sequence includes extending the symbol sequence of length M based on an extension factor *α* to obtain the extended sequence of length (M+L), where $α = \frac{L}{M}$.

In an optional manner, *α* is determined based on at least one of the following:
the MCS corresponding to the OFDM signal, or the first factor *θ*, where the value of the first factor is related to the window function of FDSS.

Determining *α* based on the parameters can balance a degree of redundancy introduced to the symbol sequence and an increase degree of a coding code rate, thereby improving the communication demodulation performance of the OFDM signal.

In an optional manner, the extended sequence includes a first extended sequence of length *L*₁, a second extended sequence of length *L*₂, and the symbol sequence of length M, where *L*₁+*L*₂=*L*. The first extended sequence is obtained by performing sequence processing on a first sequence in the symbol sequence, and the first sequence is a subsequence corresponding to an index 0 to an index *L*₁-1 in the symbol sequence. The second extended sequence is obtained by performing sequence processing on a second sequence in the symbol sequence, and the second sequence is a subsequence corresponding to an index M-*L*₂ to an index M-1 in the symbol sequence.

In this application, the first extended sequence and the second extended sequence may be considered as redundancy added to the symbol sequence. Introducing the redundancy can reduce/alleviate a loss of the communication demodulation performance of the OFDM signal caused by FDSS.

In an optional manner, *L*₁ is equal to *L*₂.

Based on the design in which *L*₁ is equal to *L*₂, a frequency-selective gain achieved by the OFDM signal on a multipath channel can be maximized for a given *L*.

In an optional manner, a sequence processing manner of the first processing includes one of the following:
obtaining the first extended sequence and the second extended sequence based on sequence replication, adding the first extended sequence to a tail of the symbol sequence, and adding the second extended sequence to a head of the symbol sequence; or
obtaining the first extended sequence and the second extended sequence based on sequence conjugation, adding the first extended sequence to a tail of the symbol sequence, and adding the second extended sequence to a head of the symbol sequence; or
obtaining the first extended sequence and the second extended sequence based on sequence reversal, adding the first extended sequence to a head of the symbol sequence, and adding the second extended sequence to a tail of the symbol sequence; or
obtaining the first extended sequence and the second extended sequence based on sequence reversal and sequence conjugation, adding the first extended sequence to a head of the symbol sequence, and adding the second extended sequence to a tail of the symbol sequence.

A shape of the window function of FDSS is similar to a mountain peak. In other words, an amplitude of the window function is high in the middle and low at both sides. In this application, a redundancy design that matches shape characteristics of the window function is introduced, that is, the first extended sequence is added to the tail or the head of the symbol sequence, and the second extended sequence is added to the head or the tail of the symbol sequence, so that degradation of the two subsequences in the symbol sequence (namely, the subsequence corresponding to the index 0 to the index *L*₁-1 and the subsequence corresponding to the index M-*L*₂ to the index M-1) caused by FDSS processing can be alleviated, thereby improving the communication demodulation performance of the OFDM signal.

In an optional manner, the transmitter further obtains or outputs a first notification message, where the first notification message indicates at least one of the following parameters: a shift amount of the cyclic shift, a length of the first extended sequence, a length of the second extended sequence, the length (M+L) of the extended sequence, the length M of the symbol sequence, L, a relative relationship between L and M, or the extension factor *α*.

Based on the first notification message, the transmitter may determine the shift amount of the cyclic shift, to perform a cyclic shift of a corresponding shift amount on the symbol sequence before the first processing.

Based on the first notification message, the transmitter may determine the length of the extended sequence, the length of the symbol sequence, the length of the first extended sequence, and the length of the second extended sequence, to determine a size of a transport block carried in the OFDM signal (namely, a quantity of bits carried in the OFDM signal), and to generate the OFDM signal.

In addition, the transmitter outputs (or sends) the first notification message, and the receiver receives the first notification message.

In an optional manner, the transmitter further obtains or outputs a second notification message, where the second notification message indicates the sequence processing manner of the first processing.

Based on the second notification message, the transmitter may determine the sequence processing manner of the first processing, and generate the OFDM signal based on the sequence processing manner.

In addition, the transmitter outputs the second notification message, and the receiver receives the second notification message.

According to a second aspect, this application provides a communication method. The method may be performed by a receiver. Unless otherwise specified, in this application, the receiver may be a receiver (for example, a network device or a terminal device), or may be a component (for example, a processor, a chip, or a chip system) in a receiver, or may be a logical module or software that implements all or some functions of a receiver. This is not specifically limited in this application.

The method may be applied to a 5G communication system or a communication system above 5G, or may be applied to a non-terrestrial communication system. This is not specifically limited in this application. The method is performed as follows:
receiving an OFDM signal; and demodulating the OFDM signal to obtain a symbol sequence, where the OFDM signal is obtained by preprocessing the symbol sequence. The preprocessing includes frequency domain spectrum shaping FDSS and first processing. The first processing extends the symbol sequence to obtain an extended sequence, and the first processing is performed before FDSS.

In an optional manner, the preprocessing further includes performing a cyclic shift on the symbol sequence, where the cyclic shift is performed before the first processing.

In an optional manner, the first processing extending the symbol sequence to obtain the extended sequence includes extending the symbol sequence of length M based on an extension length *L* to obtain the extended sequence of length (M+L), where both M and L are positive integers, and L does not exceed M.

In an optional manner, *L* is determined based on at least one of the following:
a modulation and coding scheme MCS corresponding to the OFDM signal, M, or a first factor *θ*, where a value of the first factor is related to a window function of FDSS.

In an optional manner, the first processing extending the symbol sequence to obtain the extended sequence includes extending the symbol sequence of length M based on an extension factor *α* to obtain the extended sequence of length (M+L), where $α = \frac{L}{M}$.

In an optional manner, *α* is determined based on at least one of the following:
the modulation and coding scheme MCS corresponding to the OFDM signal, or the first factor *θ*, where the value of the first factor is related to the window function of FDSS.

In an optional manner, the extended sequence includes a first extended sequence of length *L*₁, a second extended sequence of length *L*₂, and the symbol sequence of length M. The first extended sequence is obtained by performing sequence processing on a first sequence in the symbol sequence, and the first sequence is a subsequence corresponding to an index 0 to an index *L*₁-1 in the symbol sequence. The second extended sequence is obtained by performing sequence processing on a second sequence in the symbol sequence, and the second sequence is a subsequence corresponding to an index M-*L*₂ to an index M-1 in the symbol sequence.

In an optional manner, *L*₁ is equal to *L*₂.

In an optional manner, a sequence processing manner of the first processing includes one of the following:
obtaining the first extended sequence and the second extended sequence based on sequence replication, adding the first extended sequence to a tail of the symbol sequence, and adding the second extended sequence to a head of the symbol sequence; or
obtaining the first extended sequence and the second extended sequence based on sequence conjugation, adding the first extended sequence to a tail of the symbol sequence, and adding the second extended sequence to a head of the symbol sequence; or
obtaining the first extended sequence and the second extended sequence based on sequence reversal, adding the first extended sequence to a head of the symbol sequence, and adding the second extended sequence to a tail of the symbol sequence; or
obtaining the first extended sequence and the second extended sequence based on sequence reversal and sequence conjugation, adding the first extended sequence to a head of the symbol sequence, and adding the second extended sequence to a tail of the symbol sequence.

In an optional manner, the receiver further obtains or outputs a first notification message, where the first notification message indicates at least one of the following parameters: a shift amount of the cyclic shift, a length of the first extended sequence, a length of the second extended sequence, the length (M+L) of the extended sequence, the length M of the symbol sequence, L, a relative relationship between L and M, or the extension factor *α*.

Based on the first notification message, the receiver may determine the length of the extended sequence, the length of the symbol sequence, the length of the first extended sequence, and the length of the second extended sequence, to determine how to demodulate the OFDM signal.

Based on the first notification message, the receiver may determine the shift amount of the cyclic shift, to perform a reverse cyclic shift operation corresponding to the transmit end and recover the symbol sequence.

In addition, the receiver outputs (or sends) the first notification message.

In an optional manner, the receiver further obtains or outputs a second notification message, where the second notification message indicates the sequence processing manner of the first processing.

Based on the second notification message, the receiver may determine the sequence processing manner of the first processing, to enable demodulation of the received OFDM signal. The receiver may perform different demodulation processing based on a capability of the receiver. For example, if the capability of the receiver is limited, the receiver may recover the symbol sequence based on only middle M pieces of data in the received (M+L) pieces of data. In other words, *L*₁ pieces of data corresponding to the first extended sequence and *L*₂ pieces of data corresponding to the second extended sequence in the received (M+L) pieces of data are not used for recovering the symbol sequence. If the capability of the receiver is strong, the receiver may also use the *L*₁ pieces of data corresponding to the first extended sequence and *L*₂ pieces of data corresponding to the second extended sequence in the received (M+L) pieces of data to obtain a more accurate estimation of the symbol sequence.

In addition, the receiver outputs (or sends) the second notification message.

According to a third aspect, an embodiment of this application provides a communication apparatus. The communication apparatus may be a terminal device or a network device (for example, the transmitter in the first aspect or the receiver in the second aspect). The communication apparatus has a function of implementing the first aspect or the second aspect. For example, the communication apparatus includes a corresponding module, unit, or means (means) for performing the steps in the first aspect or the second aspect. The function, unit, or means may be implemented by using software or hardware, or may be implemented by hardware executing corresponding software.

In a possible design, the communication apparatus includes a processing unit and a transceiver unit. The transceiver unit may be configured to receive and transmit a signal, to implement communication between the communication apparatus and another apparatus. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to send and receive a signal. The processor executes program instructions to complete the method according to any possible design or implementation of the first aspect or the second aspect. The communication apparatus may further include one or more memories. The memory is configured to be coupled to the processor. The memory may store a necessary computer program or instructions for implementing the functions in the first aspect or the second aspect. The processor may execute the computer program or the instructions stored in the memory. When the computer program or the instructions are executed, the communication apparatus is enabled to implement the method according to any possible design or implementation of the first aspect or the second aspect.

In another possible design, the communication apparatus includes a processor. The processor may be configured to be coupled to a memory. The memory may store a computer program or instructions for implementing the functions in the first aspect or the second aspect. The processor may execute the computer program or the instructions stored in the memory. When the computer program or the instructions are executed, the communication apparatus is enabled to implement the method according to any possible design or implementation of the first aspect or the second aspect.

In another possible design, the communication apparatus includes a processor and an interface circuit. The processor is configured to: communicate with another apparatus by using the interface circuit, and perform the method according to any possible design or implementation of the first aspect or the second aspect.

It may be understood that in the third aspect, the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a fourth aspect, an embodiment of this application provides a communication system. The communication system includes the foregoing transmitter and receiver.

According to a fifth aspect, this application provides a chip system. The chip system includes a processor, and may further include a memory, to implement the method according to the first aspect or the second aspect. The chip system may include a chip, or may include a chip and another discrete component.

According to a sixth aspect, this application further provides a computer-readable storage medium. The computer-readable storage medium may be a volatile storage medium, or may be a non-volatile storage medium. The computer-readable storage medium stores computer-readable instructions. When the computer-readable instructions are run on a computer, the computer is enabled to perform the method according to the first aspect or the second aspect.

According to a seventh aspect, this application provides a computer program product including instructions. When the computer program product is run on a computer, the computer is enabled to perform the method according to various embodiments in the first aspect or the second aspect.

For technical effects that can be achieved by the second aspect to the seventh aspect, refer to descriptions of technical effects that can be achieved by corresponding possible design solutions in the first aspect. Details are not described herein again in this application.

### BRIEF DESCRIPTION OF DRAWINGS

FIG. 1 is a diagram of a communication system according to an embodiment of this application;
FIG. 2 is a diagram of an ISAC scenario according to an embodiment of this application;
FIG. 3 is a diagram of signal processing in an OFDM system;
FIG. 4 is a diagram of frequency responses corresponding to different roll-offs;
FIG. 5 is a diagram of changes in sensing performance with FDSS used;
FIG. 6 is a schematic flowchart including FDSS;
FIG. 7 is a schematic flowchart including FDSS;
FIG. 8 is a diagram of changes in subcarrier energy;
FIG. 9 is a diagram of a BER of an OFDM signal;
FIG. 10 is a schematic flowchart of bandwidth extension;
FIG. 11 is a schematic flowchart of an OFDM signal generation method;
FIG. 12 is a diagram of a time domain response of a filter;
FIG. 13A is a diagram of first processing;
FIG. 13B is a diagram of first processing;
FIG. 13C is a diagram of first processing;
FIG. 13D is a diagram of first processing;
FIG. 14A is a diagram of first processing and FDSS;
FIG. 14B is a diagram of first processing and FDSS;
FIG. 15A is a diagram of first processing and FDSS;
FIG. 15B is a diagram of first processing and FDSS;
FIG. 16 is a diagram of a simulation result;
FIG. 17A is a diagram of a simulation result;
FIG. 17B is a diagram of a simulation result;
FIG. 17C is a diagram of a simulation result;
FIG. 17D is a diagram of a simulation result;
FIG. 18 is a diagram of a structure of a communication apparatus according to an embodiment of this application;
FIG. 19 is a diagram of a structure of a communication apparatus according to an embodiment of this application; and
FIG. 20 is a diagram of a structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise stated, "a plurality of" means two or more than two. Therefore, for implementations of the apparatus and the method, reference may be made to each other, and repeated parts are not described again.

The technical solutions provided in embodiments of this application may be applied to a 5G system, or applied to a future communication system or another similar communication system. In addition, the technical solutions provided in embodiments of this application may be applied to a cellular link, a public land mobile network (public land mobile network, PLMN), a machine-to-machine (machine to machine, M2M) network, an internet of things (internet of things, IoT) network, or another network. The technical solutions may also be applied to a link between devices, for example, a device-to-device (device to device, D2D) link. The D2D link may also be referred to as a sidelink (sidelink), and the sidelink may also be referred to as a side-link, a secondary link, or the like. In embodiments of this application, the foregoing terms each mean a link established between devices of the same type, and have the same meaning. The link between the devices of the same type may be a link between terminal devices, a link between base stations, a link between relay nodes, or the like. This is not limited in embodiments of this application.

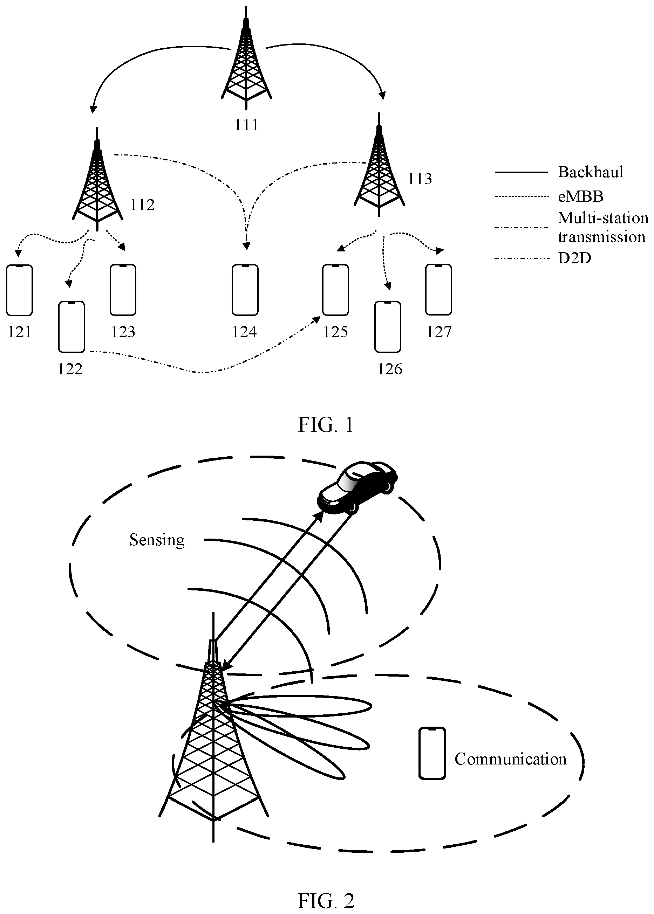

FIG. 1 is a diagram of a wireless communication system applicable to this application. As shown in FIG. 1, the wireless communication system may include at least one network device, for example, a network device 111, a network device 112, and a network device 113. The wireless communication system may further include at least one terminal device, for example, a terminal device 121, a terminal device 122, a terminal device 123, a terminal device 124, a terminal device 125, a terminal device 126, and a terminal device 127. A communication manner between the network devices may be backhaul, for example, a manner of communication between the network device 111 and the network device 112, or a manner of communication between the network device 111 and the network device 113. A communication manner between the network device and the terminal device may be enhanced mobile broadband (enhanced mobile broadband, eMBB), for example, a communication manner between the network device 112 and the terminal device 121. A communication manner between the network device and the terminal device may be multistation transmission, for example, a communication manner between the network device 112 and the network device 113, and the terminal device 124. A communication manner between the terminal devices may be D2D, for example, a communication manner between the terminal device 122 and the terminal device 125.

The terminal device may be a device that can receive scheduling and indication information of the network device and provide voice and/or data connectivity for a user, or a handheld device with a wireless connection function, or another processing device connected to a wireless modem. The terminal device may communicate with one or more core networks or the internet through a radio access network (radio access network, RAN). For example, the terminal device may be a portable, pocket-sized, handheld, computer built-in, or vehicle-mounted mobile apparatus. The terminal device may also be referred to as a subscriber unit (subscriber unit), a subscriber station (subscriber station, SS), a mobile station (mobile station, MS), a remote station (remote station), an access point (access point, AP), a remote terminal (remote terminal), an access terminal (access terminal), a user agent (user agent), customer premises equipment (customer premises equipment, CPE), a terminal (terminal), user equipment (user equipment, UE), a mobile terminal (mobile terminal, MT), or the like. The terminal device may alternatively be a wearable device. The terminal device may alternatively be a device in a next-generation communication system, for example, a terminal device in a 5G network, a terminal device in a future evolved PLMN, or a terminal device in an NR communication system. Currently, the terminal device may be a mobile phone (mobile phone), a tablet computer, a notebook computer, a palmtop computer, customer premises equipment (customer premises equipment, CPE), a mobile internet device (mobile internet device, MID), a wearable device (for example, a smartwatch, a smart band, or a pedometer), a vehicle-mounted device (for example, a vehicle-mounted device on an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like. The terminal device may alternatively be another device with a function of a terminal. For example, the terminal device may alternatively be a device that functions as a terminal in D2D communication.

The network device is an entity configured to send or receive a signal on a network side, for example, a transmission-reception point (transmission-reception point, TRP) or a gNB. The network device may be an AP in a wireless local area network (wireless local area networks, WLAN) or a base transceiver station (base transceiver station, BTS) in a global system for mobile communications (global system for mobile communications, GSM) or code division multiple access (code division multiple access, CDMA), or may be a NodeB (NodeB, NB) in a wideband code division multiple access (wideband code division multiple access, WCDMA), or may be an evolved NodeB (evolved NodeB, eNB or eNodeB) in long-term evolution (long-term evolution, LTE). The network device may alternatively be a relay station or an access point, or a vehicle-mounted device, a wearable device, or a network device in a 5G network, or a network device in a future evolved PLMN, or a device such as a gNodeB/gNB in an NR system. In some deployments, the gNB may include a CU and a DU. The CU implements some functions of the gNB, and the DU implements some functions of the gNB. For example, the CU is responsible for processing non-real-time protocols and services, for example, implementing radio resource control (radio resource control), a service data adaptation protocol (service data adaptation protocol, SDAP) function, and a function of a packet data convergence protocol (packet data convergence protocol, PDCP) layer. The DU is responsible for processing physical layer protocols and real-time services, for example, implementing functions of a radio link control (radio link control, RLC) layer, a medium access control (medium access control, MAC) layer, and a physical (physical, PHY) layer. The gNB may further include an active antenna unit (active antenna unit, AAU). The AAU implements some physical layer processing functions, radio frequency processing, and a function related to an active antenna. Information at the radio resource control layer is eventually converted into information at the PHY layer, or is converted from information at the PHY layer. Therefore, in this architecture, higher layer signaling (for example, radio resource control layer signaling) may also be considered as being sent by the DU, or sent by the DU and the AAU. It may be understood that the network device may be a device including one or more of a CU node, a DU node, and an AAU node. In addition, the CU may be a network device in an access network (radio access network, RAN), or the CU may be a network device in a core network (core network, CN). This is not limited in this application. In addition, in embodiments of this application, the network device provides a service to a cell, and the terminal device communicates with the network device by using a transmission resource (such as a frequency domain resource or a spectrum resource) used by the cell. The cell may be a cell corresponding to the network device (for example, a base station). The cell may belong to a macro base station, or may belong to a base station corresponding to a small cell (small cell). For example, the small cell may include a metro cell (Metro cell), a micro cell (Micro cell), a pico cell (Pico cell), a femto cell (Femto cell), and the like. Because the small cell features small coverage and low transmit power, the small cell may provide a high-rate data transmission service. In addition, in another possible case, the network device may be another apparatus providing a wireless communication function for the terminal device. A specific technology and a specific device form that are used by the network device are not limited in embodiments of this application. For example, in an open radio access network (open radio access network, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

For ease of understanding embodiments of this application, the following first briefly describes terms in embodiments of this application.

### (1) ISAC

ISAC integrates communication and sensing functions, so that future communication systems have both the communication and sensing functions. During information transmission through a radio channel, characteristics of the channel are actively sensed and analyzed to sense physical characteristics of an ambient environment, thereby implementing enhancement of both the communication and sensing functions. Communication is information transmission between two or more communication devices. Sensing is detecting parameters of a physical environment based on a communication signal, for example, ranging and velocity measurement. As shown in FIG. 2, a transmitted signal of a base station may be used for sensing ambient environment information, to assist in communication link design and avoid some obstacles (such as a vehicle), thereby improving communication performance.

A signal that meets both communication and sensing signal requirements is used in the ISAC, for example, an OFDM signal. An ISAC transmitter transmits an OFDM signal to a to-be-sensed target, and an echo signal is generated after the OFDM signal is reflected by the target. There is a delay between the echo signal and the transmitted signal. At an ISAC receiver, a range profile is obtained by performing time-domain or frequency-domain digital signal processing on the echo signal and the transmitted signal. Then, a delay estimate is obtained by searching for a peak in the range profile, and finally, a distance to the to-be-sensed target is determined based on the delay estimate.

OFDM is one of the waveforms currently used in 4G and 5G systems. To ensure uplink coverage, uplink transmission in the current 4G and 5G systems also supports discrete Fourier transform spread orthogonal frequency division multiplexing (DFT spread OFDM, DFT-s-OFDM), which exhibits characteristics of a single-carrier waveform and has a peak-to-average power ratio (peak-to-average power ratio, PAPR) significantly lower than that of a multi-carrier waveform such as OFDM. In an ISAC scenario, a single-carrier waveform or a waveform with single-carrier characteristics (for example, DFT-s-OFDM) is recommended for sensing according to research. However, due to a non-constant modulus of a frequency domain signal, an additional design is required. In contrast, a multi-carrier OFDM waveform can achieve a constant-modulus frequency domain signal, for example, by using subcarriers to carry phase-shift keying symbols.

### (2) OFDM signal

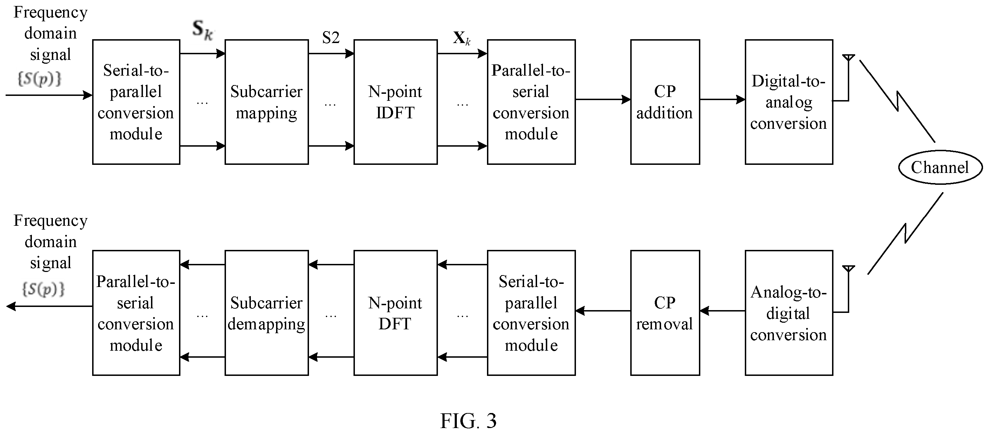

FIG. 3 is a diagram of signal processing in an OFDM system. An input signal at a signal transmit end is a frequency domain signal {*S*(*p*)}. The frequency domain signal is processed by a serial-to-parallel (serial-to-parallel, S/P) conversion module, so that *M* pieces of consecutive data *S*(*kM*), *S*(*kM +* 1), ··· , *S*(*kM + M -* 1) are converted into an M-dimensional data block **S***ₖ* = *[S(kM),S(kM +* 1), ··· *,S*(*kM + M -* 1)]^{T}, where a subscript *k* represents a sequence number of an OFDM symbol, and a superscript T represents transpose. Through subcarrier mapping, the M pieces of data carried in **S***ₖ* modulate *N*_{sc} subcarriers in *N* subcarriers, where *N*_{sc} *= M,* and remaining (N - *N*_{sc}) subcarriers are modulated by data 0. An N-dimensional data vector **X***ₖ* is transformed through N-point inverse discrete Fourier transform (inverse discrete Fourier transform, IDFT) to obtain *N* complex time domain samples **x***ₖ* = [*xₖ*(0), *xₖ*(1), ··· , *xₖ*(*N -* 1)]^{T}. After **x***ₖ* is processed by the parallel-to-serial conversion module, a cyclic prefix (cyclic prefix, CP) addition operation is performed. Through CP addition, last G samples of **x***ₖ* are replicated, and the G samples are appended to the start of **x***ₖ* to obtain a time domain OFDM signal. Then, digital-to-analog conversion is performed, and the OFDM signal is transmitted through an antenna at the signal transmit end. The OFDM signal is transmitted through a channel. A signal receive end receives the OFDM signal, and performs analog-to-digital conversion, CP removal, serial-to-parallel conversion module, N-point discrete Fourier transform (discrete Fourier transform, DFT), subcarrier demapping, and parallel-to-serial conversion module to obtain the frequency domain signal {*S*(*p*)}. *xₖ*(*n*), *n* = 0,1, ··· , *N* - 1 may be represented by the following Formula 1: ${x}_{k} \left(n\right) = \frac{1}{\sqrt{N}} {\sum }_{n ′ = 0}^{N - 1} {X}_{k} \left(n′\right) {e}^{j 2 πkn ′ / N}$ Formula

*Xₖ*(*n'*), *n'* = 0,1, ··· *, N -* 1 represents an output of subcarrier mapping, e represents Euler's number, and *j* represents an imaginary unit, where *j*² = -1. A subcarrier mapping rule is represented by the following Formula 2: ${X}_{k} \left(n′\right) = \left\{\begin{matrix}{S}_{k} \left(n′-{n}_{0}\right) , n ′ \\ 0 ,\end{matrix} \begin{matrix}∈ \left\{{n}_{0},{n}_{0}+1,⋯,{n}_{0}+{N}_{sc}-1\right\} \\ elsewhere\end{matrix}\right.$ Formula 2

*n*₀ is an integer, *Sₖ*(*l*) is an *l^{th}* element in **S***ₖ*, where *l* = 0,1, ··· , *N*_{sc} - 1.

It should be understood that, when a transform size N satisfies a specific constraint, for example, N is a power of 2, 3, or 5, IDFT may alternatively be implemented by using efficient inverse fast Fourier transform (inverse fast Fourier transform, IFFT). Correspondingly, DFT may alternatively be implemented by using efficient FFT. In the following description, IDFT and IFFT are interchangeable, and DFT and fast Fourier transform (fast Fourier transform, FFT) are interchangeable.

*N*_{sc} represents a quantity of subcarriers corresponding to a transmission bandwidth of the OFDM signal. In the foregoing description, *N*_{sc} is equal to *M.* It should be understood that *N*_{sc} may alternatively be greater than *M.* For example, in this application, sequence extension is performed on **S***ₖ* of length M, and it is assumed that a length of an extended sequence is equal to *N*_{sc}. Therefore, *N*_{sc} ≥ *M.*

### (3) Roll-off (roll-off) and spectrum expansion factor (spectrum extension factor)

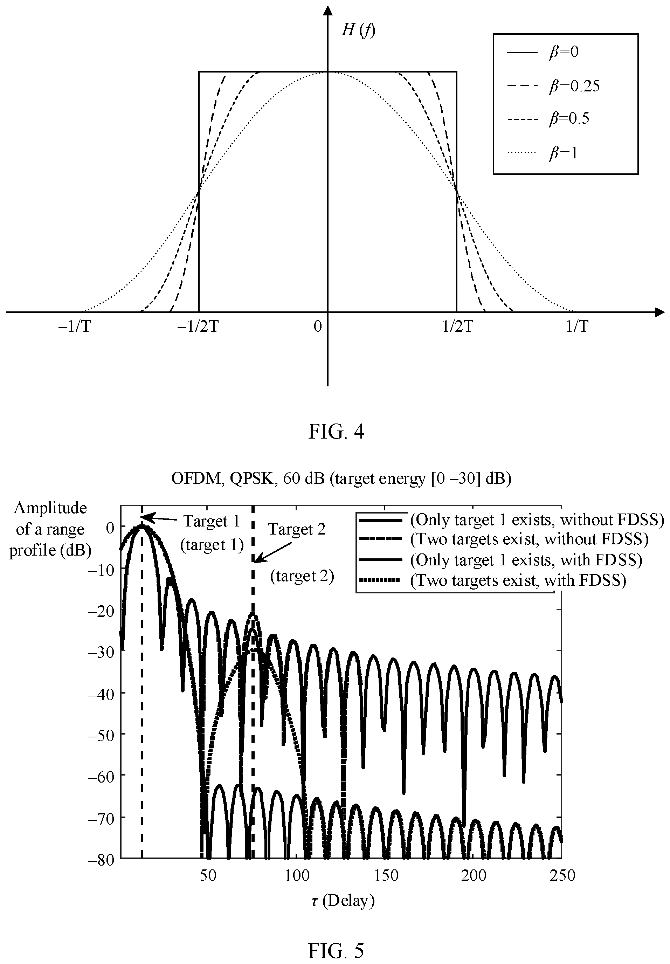

Roll-off is steepness of a frequency response function with respect to frequency. Figure 4 shows frequency responses for different roll-offs (*β* = 0, 0.25, 0.5, 1). A frequency response in a rectangular shape (namely, when *β* = 0) is the steepest. In a specific application, it is difficult to implement a filter with a frequency response of a rectangular window. Using the roll-off can reduce difficulty in implementing the filter, but increases a bandwidth. A roll-off factor is defined in the following Formula 3: $β = \frac{Increased bandwidth}{Bandwidth without roll - off} = \frac{Bandwidth after extension}{Bandwidth without roll - off - 1} - 1$ Formula 3

A bandwidth without roll-off corresponds to a bandwidth when *β* = 0. With reference to FIG. 4, it can be learned that when *β* = 1, the bandwidth is doubled. When *β* = 0.5, the bandwidth increases by 50%.

In addition, with respect to spectrum/bandwidth extension, there is also a spectrum/bandwidth extension factor (spectrum/bandwidth extension factor), which is defined in the following Formula 4: $\frac{Spectrum}{Bandwidth extension factor} = \frac{Increased bandwidth}{Bandwidth after extension} = \frac{β ∗ Bandwidth without roll - off}{\left(1+β\right) ∗ Bandwidth without roll - off} = \frac{β}{\left(1+β\right)}$ Formula 4

For example, if *β* = 1, the spectrum/bandwidth extension factor is 0.5; if *β* = 0.5, the spectrum/bandwidth extension factor is 1/3.

In this application, in the ISAC scenario, using FDSS can reduce a sidelobe level of a range profile in sensing and improve performance of detecting a target. A power of an echo signal generated by a *p*^{th} target (0 ≤ *p* ≤ *P -* 1) is *αₚ* (*αₚ* > 0), and a relative delay between the echo signal and a transmitted signal is *τₚ* samples. After frequency domain windowing is performed, the range profile |χ(*τ*)| is represented by the following Formula 5: $\left|χ\left(τ\right)\right| ∝ \left|{\sum }_{p = 0}^{P - 1} {\sum }_{l = 0}^{{N}_{sc} - 1} ω \left(l\right){\left|{S}_{k}\left(l\right)\right|}^{2}\sqrt{{α}_{p}}{e}^{j 2 π \left(τ-{τ}_{p}\right) \left(l+{n}_{0}\right) / N}\right|$ Formula 5

*ω*(*l*), for *l =* 0,1, ··· *, N_{sc}* - 1, represents a coefficient of an FDSS window function; ∝ represents a proportional-to symbol, ${\sum }_{l = 0}^{{N}_{sc} - 1} {\left|ω\left(l\right)\right|}^{2} = {N}_{sc}$, each *τₚ,* ∀*p* is an integer, and *τₚ*, ∀*p* does not exceed a CP length. ${\sum }_{p = 0}^{P - 1} \sqrt{{α}_{p}} {S}_{k} \left(l\right) {e}^{- j 2 {πτ}_{p} \left(l+{n}_{0}\right) / N}$ is obtained after subcarrier demapping is performed on a frequency domain signal ( ${\sum }_{p = 0}^{P - 1} \sqrt{{α}_{p}} {X}_{k} \left(n′\right) {e}^{- j 2 {πτ}_{p} n ′ / N}$).

FIG. 5 shows changes in sensing performance caused by FDSS. In FIG. 5, the transmitted signal is a QPSK-OFDM signal (that is, *Sₖ*(*l*) is a QPSK symbol). To-be-sensed targets are denoted as target 1 and target 2. A power of an echo signal generated by the target 1 is 30 dB higher than a power of an echo signal generated by the target 2. A relative delay between the echo signal generated by the target 1 and a transmitted signal is 12 samples, that is, *τ*₀ = 12. A relative delay between the echo signal generated by the target 2 and a transmitted signal is 75 samples, that is, *τ*₁ = 75.

FIG. 5 shows a range profile when only the target 1 exists and FDSS is not used, a range profile when both the target 1 and the target 2 exist and FDSS is not used, a range profile when only the target 1 exists and FDSS is used, and a range profile when both the target 1 and the target 2 exist and FDSS is used. It can be learned from FIG. 5 that, when FDSS is not used, a main lobe of a range profile (at *τ* = 75) generated by the target 2 is lower than a sidelobe of a range profile (at *τ* = 29) generated by the target 1. As a result, a sidelobe position of the range profile generated by the target 1 is incorrectly considered as a position of the target 2, that is, an estimate of *τ*₁ is 29. When FDSS is used, the sidelobe of the range profile generated by the target 1 is suppressed to a low level, which is below a level of the main lobe of the range profile generated by the target 2. In this case, when both the target 1 and the target 2 exist and FDSS is used, the range profile includes two large main lobes, and the peak positions of the main lobes respectively correspond to positions of the target 1 and the target 2. Based on this, the weak target 2 can be correctly estimated.

It should be noted that, in the ISAC scenario, FDSS is applied in the following three manners:

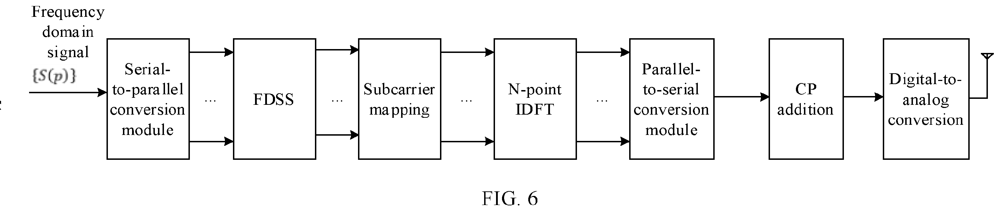

Manner 1: FDSS is applied only at a signal transmit end, as shown in FIG. 6. After the frequency domain signal {*S*(*p*)} is processed by the serial-to-parallel conversion module, FDSS is performed. Then, subcarrier mapping, N-point IDFT, parallel-to-serial conversion module, CP addition, and digital-to-analog conversion are sequentially performed to obtain the OFDM signal. When FDSS is applied only at the transmit end, the frequency domain signal corresponding to the transmitted signal is *Sₖ*(*l*) ∗ *ω_{T,only}*(*l*), where *ω*_{*T*,*only*}(*l*) = *ω*(*l*), and *ω*(*l*) may be understood with reference to Formula 5. When there is no noise, the frequency domain signal output by subcarrier mapping is represented by the following Formula 6: ${ω}_{T , only} \left(l\right) \left({\sum }_{p = 0}^{P - 1} \sqrt{{α}_{p}} {S}_{k}\left(l\right){e}^{- j 2 {πτ}_{p} \left(l+{n}_{0}\right) / N}\right)$ Formula 6

It can be learned that ${ω}_{T , only} \left(l\right) \left({\sum }_{p = 0}^{P - 1} \sqrt{{α}_{p}} {S}_{k} \left(l\right) {e}^{- j 2 {πτ}_{p} \left(l+{n}_{0}\right) / N}\right)$ multiplied element-wise by ${S}_{k}^{∗} \left(l\right)$ (namely, the conjugate of *Sₖ*(*l*) ) may produce ${\sum }_{p = 0}^{P - 1} ω \left(l\right) {\left|{S}_{k}\left(l\right)\right|}^{2} \sqrt{{α}_{p}} {e}^{- j 2 {πτ}_{p} \left(l+{n}_{0}\right) / N}$ in Formula 5.

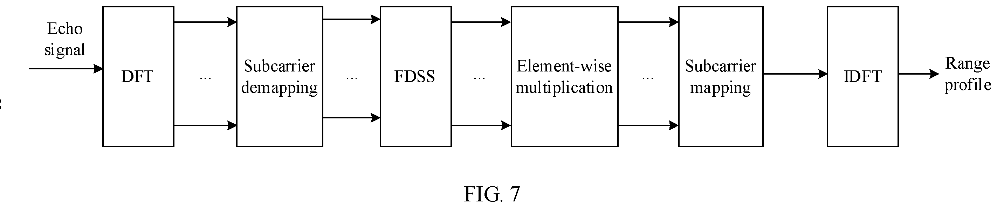

Manner 2: FDSS is applied only at a signal receive end, as shown in FIG. 7. A range profile is obtained after DFT, subcarrier demapping, FDSS, frequency-domain element-wise multiplication, subcarrier mapping, and IDFT are performed on the echo signal. When FDSS is applied only at the receive end, the frequency domain signal corresponding to the transmitted signal is *Sₖ*(*l*). FDSS being applied on the echo signal (when there is no noise, the frequency domain signal output by subcarrier mapping is ${\sum }_{p = 0}^{P - 1} \sqrt{{α}_{p}} {S}_{k} \left(l\right) {e}^{- j 2 {πτ}_{p} \left(l+{n}_{0}\right) / N}$) may be represented by the following Formula 7: ${ω}_{R , only} \left(l\right) ∗ \left({\sum }_{p = 0}^{P - 1} \sqrt{{α}_{p}} {S}_{k}\left(l\right){e}^{- j 2 {πτ}_{p} \left(l+{n}_{0}\right) / N}\right)$ Formula 7

*ω_{R,only}*(*l*) = *ω*(*l*), and *ω*(*l*) may be understood with reference to Formula 5.

It can be learned that ${ω}_{R , only} \left(l\right) \left({\sum }_{p = 0}^{P - 1} \sqrt{{α}_{p}} {S}_{k} \left(l\right) {e}^{- j 2 {πτ}_{p} \left(l+{n}_{0}\right) / N}\right)$ multiplied element-wise by ${S}_{k}^{∗} \left(l\right)$ may produce ${\sum }_{p = 0}^{P - 1} ω \left(l\right) {\left|{S}_{k}\left(l\right)\right|}^{2} \sqrt{{α}_{p}} {e}^{- j 2 {πτ}_{p} \left(l+{n}_{0}\right) / N}$ in Formula 5.

Manner 3: FDSS is applied at both a transmit end and a receive end. When FDSS is applied at both the receive end and the transmit end, the frequency domain signal corresponding to the transmitted signal is represented by the following Formula 8: ${{S}^{˜}}_{k} \left(l\right) = {S}_{k} \left(l\right) ∗ {ω}_{T} \left(l\right)$ Formula 8 ${ω}_{T} \left(l\right) = x \sqrt{ω \left(l\right)}$*,* and *ω*(*l*) may be understood with reference to Formula 5, where x is used so that the transmitted signals in the three manners have the same power, that is, ${\sum }_{l = 0}^{{N}_{sc} - 1} {\left|ω\left(l\right)\right|}^{2} = {\sum }_{l = 0}^{{N}_{sc} - 1} {\left|x\sqrt{ω \left(l\right)}\right|}^{2} = {N}_{sc}$. When there is no noise, the frequency domain signal output by a subcarrier demapping module is represented by the following Formula 9: ${ω}_{T} \left(l\right) \left({\sum }_{p = 0}^{P - 1} \sqrt{{α}_{p}} {S}_{k}\left(l\right){e}^{- j 2 {πτ}_{p} \left(l+{n}_{0}\right) / N}\right)$ Formula 9

After FDSS is applied, the following Formula 10 is obtained: $\begin{matrix}{ω}_{R} \left(l\right) . {ω}_{T} \left(l\right) \left({\sum }_{p = 0}^{P - 1} \sqrt{{α}_{p}} {S}_{k} \left(l\right) {e}^{- j 2 {πτ}_{p} \left(l+{n}_{0}\right) / N}\right) = \\ {x}^{2} ω \left(l\right) \left({\sum }_{p = 0}^{P - 1} \sqrt{{α}_{p}} {S}_{k} \left(l\right) {e}^{- j 2 {πτ}_{p} \left(l+{n}_{0}\right) / N}\right)\end{matrix}$ Formula 10
${ω}_{R} \left(l\right) = {ω}_{T} \left(l\right) = x \sqrt{ω \left(l\right)} .$

It should be noted that, applying FDSS only at the receive end or applying FDSS only at the transmit end yields the same sensing signal-to-noise ratio (namely, the signal-to-noise ratio at the main lobe peak). Applying FDSS at both the receive end and the transmit end yields a higher sensing signal-to-noise ratio than applying FDSS only at the receive end or applying FDSS only at the transmit end. It is assumed that **S***ₖ* (a sequence obtained by processing the frequency domain signal through the serial-to-parallel conversion module) is a QPSK symbol sequence, and a sensing signal-to-noise ratio gain is 20 * *log*10(*x*²) dB. It is assumed that *ω*(*l*) is a raised cosine (raised cosine, RC) with a roll-off factor *β*, and $\sqrt{ω \left(l\right)}$ is a root raised cosine (root raised cosine, RRC) with a roll-off factor *β*, where *N*_{sc} = 720. Table 1 shows values of x and sensing signal-to-noise ratio gains corresponding to different values of *β*. For example, when *β* is 0.2, x is 1.0332, and 20 * *log*10(*x*²)=0.56 dB. It can be learned from Table 1 that the sensing signal-to-noise ratio gain monotonically increases as the value of *β* increases.

**Table 1**

| Roll-off factor *β* | *x* | 20 * *log*10(*x*²) (dB) |
|---|---|---|
| 0.2 | 1.0332 | 0.56 |
| 0.4 | 1.0594 | 1 |
| 0.6 | 1.0797 | 1.33 |
| 0.8 | 1.0952 | 1.58 |
| 1 | 1.1064 | 1.75 |

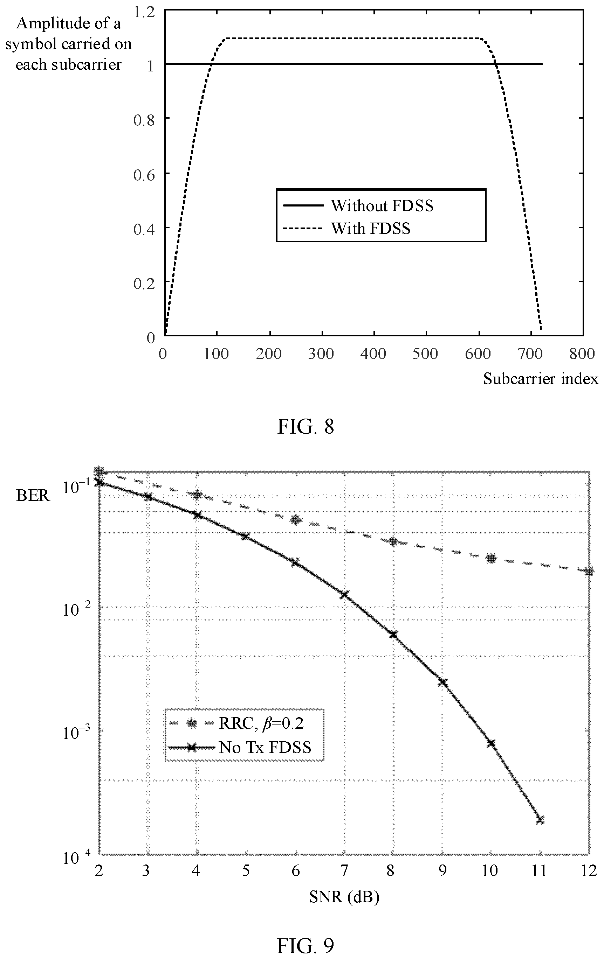

Using FDSS can improve sensing performance, but degrades communication performance. FIG. 8 shows amplitudes of data carried on subcarriers with and without FDSS at the transmit end. It can be learned from FIG. 8 that using FDSS increases energy on middle subcarriers, and reduces the energy of edge subcarriers. This degrades demodulation performance of data carried on the edge subcarriers, for example, a bit error rate (bit error rate, BER). FIG. 9 shows a BER of OFDM signal demodulation with and without FDSS through an additive white Gaussian noise (additive white Gaussian noise, AWGN) channel. It can be learned from FIG. 9 that using FDSS degrades the BER of OFDM signal demodulation.

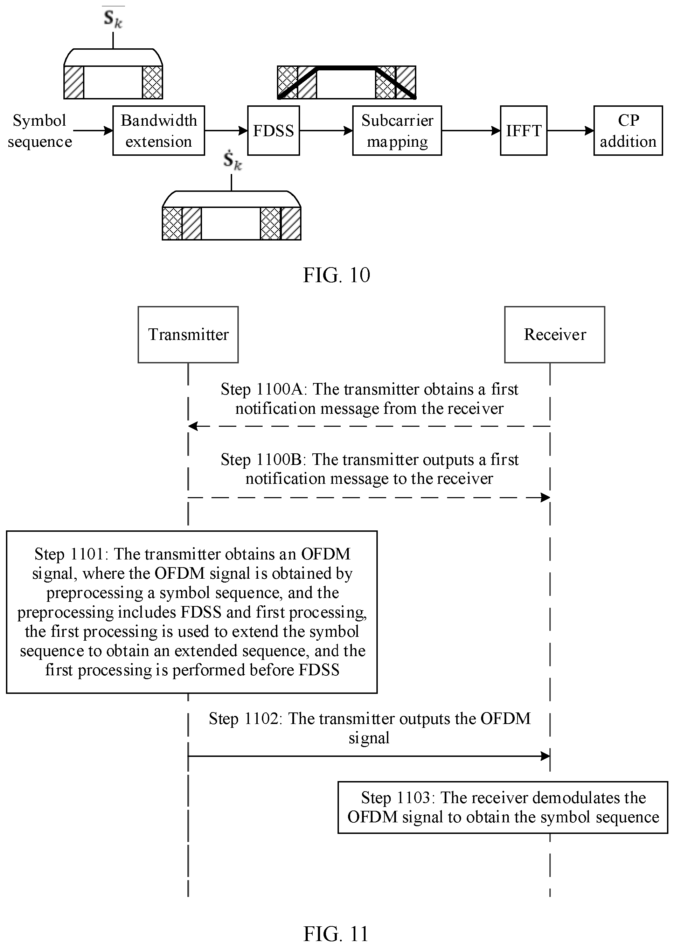

Using FDSS in an OFDM signal can improve performance of detecting a target (especially a weak target (namely, a target whose echo signal has low power)) in ISAC, but degrades demodulation performance of the OFDM signal. Based on this, to improve communication demodulation performance in the ISAC scenario while ensuring performance of detecting the target, this application introduces a redundant sequence before FDSS processing, so that the demodulation performance of the OFDM signal can be improved. As shown in FIG. 10, the frequency domain signal **S***ₖ* is an input into a bandwidth extension module (which may also be referred to as a sequence extension module and is configured to introduce a redundant sequence), and an output of the bandwidth extension module **Ṡ***ₖ* is used as an input into an FDSS module. An output of the FDSS module is equal to the input multiplied element-wise by an FDSS coefficient. Then, subcarrier mapping, IFFT, and CP addition are performed to obtain the OFDM signal. Processing of the bandwidth extension module may be understood with reference to descriptions of first processing provided below. Details are not described herein.

It should be understood that, although not shown in FIG. 10, a *c*₀-point cyclic shift may be further performed on the frequency domain signal before the frequency domain signal **S***ₖ* is fed into the bandwidth extension module, where *c*₀ is an integer. For example, a *c*₀-point cyclic shift is performed on a symbol sequence of length *M*, in which an *m̃*^{th} element is denoted as *d̃*(*m̃*), to generate a symbol sequence *d*(*m*) . A relationship between *d*(*m*) and *d̃*(*m̃*) is represented by the following Formula 11: $d \left(m\right) = {d}^{˜} \left[\left(m+{c}_{0}\right) mod M\right]$ Formula 11

mod represents a modulo operation. For example, 12 mod 5=2.

Refer to FIG. 11. An OFDM signal generation method is provided. The method may be performed by interaction between a transmitter and a receiver. Unless otherwise specified, in this application, the transmitter may be a transmitter (for example, a network device or a terminal device), or may be a component (for example, a processor, a chip, or a chip system) in a transmitter, or may be a logical module or software that implements all or some functions of a transmitter. The receiver may be a receiver (for example, a network device or a terminal device), or may be a component (for example, a processor, a chip, or a chip system) in a receiver, or may be a logical module or software that implements all or some functions of a receiver. This is not specifically limited in this application.

The method may be applied to a 5G communication system, a 5.5G communication system, or a future 6G communication system. The method may be alternatively applied to a non-terrestrial communication system or the like. This is not limited in this application. For example, the transmitter is a terminal device, and the receiver is a network device; or the transmitter is a network device, and the receiver is a terminal device; or the transmitter is a network device, and the receiver is a network device; or the transmitter is a terminal device, and the receiver is a terminal device. It should be noted that FIG. 11 is a schematic flowchart of a method embodiment of this application, and shows detailed communication steps or operations of the method. However, these steps or operations are merely examples. Other operations or variants of various operations in FIG. 11 may be further performed in embodiments of this application. In addition, the steps in FIG. 11 may be performed in a sequence different from a sequence shown in FIG. 11, and not all operations in FIG. 11 may be performed. The method is performed as follows.

Step 1101: The transmitter obtains an OFDM signal, where the OFDM signal is obtained by preprocessing a symbol sequence, and the preprocessing includes FDSS and first processing. The first processing extends the symbol sequence to obtain an extended sequence, and the first processing is performed before FDSS.

It should be noted that, in addition to the foregoing preprocessing, operations such as subcarrier mapping, IDFT, and CP addition are further performed on the symbol sequence. Details are not described in this application. Refer to FIG. 3 for understanding.

It should also be noted that, in addition to FDSS and the first processing, the preprocessing further includes performing a cyclic shift on the symbol sequence, where the cyclic shift is performed before the first processing. Before the first processing, a *c*₀-point cyclic shift is performed on the symbol sequence, which may be understood with reference to Formula 11. Details are not described herein again.

The first processing may correspond to the bandwidth extension module in FIG. 10 and is configured to introduce redundant sequences (referred to as a first extended sequence and a second extended sequence below). In an optional implementation, the transmitter may extend the symbol sequence of length M based on an extension factor *α* to obtain the extended sequence of length (M+L), where $α = \frac{L}{M}$, 0 < *α* ≤ 1, both L and M are positive integers, and L does not exceed M. For example, if the extension factor is 0.5, a length of the extended sequence is 1.5*M (1.5*M=M+0.5*M). In addition, if *α**M is not an integer, rounding down, rounding up, or rounding off may be used to ensure that *α**M is an integer. In another optional implementation, the transmitter may extend the symbol sequence of length M based on an extension length *L* to obtain the extended sequence of length (M+L). For example, if the extension length is 6, a length of the extended sequence is M+6.

Specifically, the extension factor *α* may be determined based on at least one of the following:
an MCS corresponding to the OFDM signal, or a first factor *θ*, where a value of the first factor is related to a window function of FDSS.

The MCS includes a modulation scheme (for example, quadrature phase shift keying (quadrature phase shift keying, QPSK) or quadrature amplitude modulation (quadrature amplitude modulation, QAM)) and a coding code rate. In this application, a modulation scheme corresponding to the OFDM signal is a modulation scheme of the symbol sequence. When a quantity of subcarriers is determined, in one case, a larger *α* indicates a smaller M, that is, a smaller quantity of pieces of valid data carried in the OFDM signal. Quantity of information bits=Quantity of coded bits*Coding code rate, and Quantity of coded bits=*M* * *Qₘ*, where *Qₘ* represents a quantity of bits carried in each piece of valid data. For example, when the valid data is a QPSK symbol, *Qₘ*=2; and when the valid data is a 16-QAM symbol, *Qₘ*=4. Based on this, it can be learned that when the quantity of transmitted information bits and the modulation scheme remain unchanged, increasing *α* increases the code rate (that is, *α* is negatively correlated with the coding code rate). As a result, a higher signal-to-noise ratio is required to achieve same demodulation performance (for example, a BER). In another case, a smaller *α* indicates a larger M. In this case, the first processing operation introduces redundancy to only a small part of elements (namely, the first extended sequence and the second extended sequence) in the symbol sequence. The FDSS operation reduces the energy at edge subcarriers, causing poor demodulation performance of data on subcarriers that do not have redundancy introduced.

The value of the first factor is related to the window function of FDSS, and different window functions *ω*(*l*) of FDSS correspond to different values of the first factor. Specifically, the value of the first factor may be determined in the following three manners:
Manner 1: If *ω*₁(*l*) is a Nyquist (Nyquist) filter with a roll-off factor *β*, then *θ* = *β.*
Manner 2: If *ω*₂(*l*) is a frequency-domain truncated Nyquist filter with a roll-off factor *β* and a truncation factor *µ*, then *θ* = *β*(1 - *µ*).
Manner 3: If *ω*₃(*l*) is a non-Nyquist filter or a non-frequency-domain truncated Nyquist filter, for example, with a time domain response of [0.28 1 0.28] (where 0.28, 1, and 0.28 are three tap coefficients of the filter), a Nyquist filter or a frequency-domain truncated Nyquist filter having a similar shape to *ω*₃(*l*) may be found to determine *θ*.

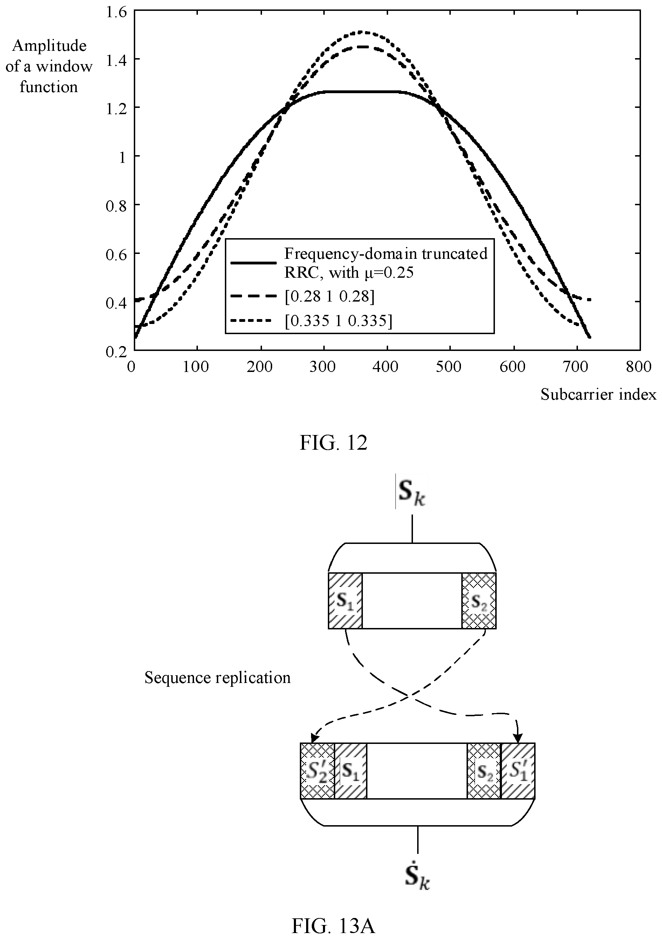

For example, if a Nyquist filter with the roll-off factor *β* has a frequency domain response shape similar to *ω*₃(*l*), then *θ* = *β* + *β*₀, where *β*₀ is a decimal greater than or equal to 0, and *β*₀ is specifically related to *ω*₃(*l*)*.* Alternatively, if a frequency-domain truncated Nyquist filter with the roll-off factor *β* and the truncation factor *µ* has a frequency domain response shape similar to *ω*₃(*l*), then *θ* = *β*(1 *- µ*) *+ β*₀, where *β*₀ is a decimal greater than or equal to 0, and *β*₀ is specifically related to *ω*₃(*l*)*.* As shown in FIG. 12, a shape of a frequency-domain truncated RRC with a roll-off factor of 1 and a truncation factor of 0.25 is similar to a shape of *ω*₃(*l*) with a time domain response of [0.28 1 0.28] or a time domain response of [0.335 1 0.335]. In this case, *θ*=1*(1-0.25)+*β*₀=0.75+*β*₀.

It should be noted that *α* ≤ *θ*, which can avoid degradation of the signal demodulation performance. In addition, a length of the FDSS window function is the same as the length of the extended sequence.

In addition, the extension factor *α* may be further related to a channel parameter between the transmitter and the receiver. The channel parameter may be a channel time domain response, a channel frequency response, power delay distribution, or the like. That the extension factor *α* may be further related to the channel parameter may be understood as that different channels correspond to different optimal designs of *α.*

It should also be understood that larger *L*₁ and *L*₂ indicate a larger frequency-selective channel gain that can be obtained by the OFDM signal. However, in this case, *L* or *α* is also larger, and the coding code rate is high. For some channels, an increase in the frequency-selective gain achieved by increasing *α* is not sufficient to compensate a performance loss caused by an increase in the code rate.

Specifically, *L* may be determined based on at least one of the following: the MCS corresponding to the OFDM signal, M, or the first factor *θ*.

The MCS includes the modulation scheme (for example, QPSK or QAM) and the coding code rate. In this application, the modulation scheme corresponding to the OFDM signal is the modulation scheme of the symbol sequence. When a quantity of subcarriers is determined, in one case, a larger *L* indicates a smaller M, that is, a smaller quantity of pieces of valid data carried in the OFDM signal. Based on this, it can be learned that when the quantity of transmitted information bits and the modulation scheme remain unchanged, increasing *L* increases the code rate (that is, *L* is negatively correlated with the coding code rate). As a result, a higher signal-to-noise ratio is required to achieve same demodulation performance (for example, a BER). In another case, a smaller *L* indicates a larger M. In this case, the first processing operation introduces redundancy to only a small part of elements in the symbol sequence. The FDSS operation reduces the energy at edge subcarriers, causing poor demodulation performance of data on subcarriers that do not have redundancy introduced.

The first factor *θ* may be understood with reference to the foregoing description. Details are not described herein again. Because $α = \frac{L}{M}$, it can be learned that a value of L is related to the length M of the symbol sequence and *α*. Because *α* ≤ *θ*, it may be deduced that the value of L is related to the first factor *θ*.

In an embodiment, the extended sequence may include a first extended sequence of length *L*₁, a second extended sequence of length *L*₂, and the symbol sequence of length M, where *L*₁ +*L*₂ =L. The first extended sequence is obtained by performing sequence processing (the sequence processing may include sequence replication, sequence conjugation, sequence reversal, or the like) on a first sequence in the symbol sequence, and the first sequence is a subsequence corresponding to an index 0 to an index *L*₁-1 in the symbol sequence. The second extended sequence is obtained by performing sequence processing on a second sequence in the symbol sequence, and the second sequence is a subsequence corresponding to an index M-*L*₂ to an index M-1 in the symbol sequence. In this application, the first extended sequence and the second extended sequence may be considered as redundancy added to the symbol sequence. Introducing the redundancy can reduce/alleviate a loss of the communication demodulation performance of the OFDM signal caused by FDSS.

For example, the symbol sequence is [1 2 3 4 5 6 7 8 9 10], *L*₁ is 3, *L*₂ is 4, the first sequence is [1 2 3] (namely, a subsequence corresponding to indexes 0 to 2 (*L*₁-1) in the symbol sequence), and the second sequence is [7 8 9 10] (namely, a subsequence corresponding to indexes 6 (M-*L*₂) to 9 (M-1) in the symbol sequence). The first sequence is reversed to obtain a first extended sequence [3 2 1], and the second sequence is reversed to obtain a second extended sequence [10 9 8 7].

In addition, a length of the first extended sequence *L*₁ may be equal to a length of the second extended sequence *L*₂. Based on the design in which *L*₁ is equal to *L*₂, a frequency-selective gain achieved by the OFDM signal on a multipath channel can be maximized for a given L.

Optionally, a sequence processing manner of the first processing includes one of the following:
Manner 1: Obtaining the first extended sequence and the second extended sequence based on sequence replication, adding the first extended sequence to a tail of the symbol sequence, and adding the second extended sequence to a head of the symbol sequence

As shown in FIG. 13A, for a symbol sequence **S***ₖ*, a length of a first sequence **S**₁ in the symbol sequence is *L*₁, and a length of a second sequence **S**₂ is *L*₂. The first sequence is replicated to obtain a first extended sequence ${S}_{1}^{′}$, and the second sequence is replicated to obtain a second extended sequence ${S}_{2}^{′}$. Then, the first extended sequence ${S}_{1}^{′}$ is added to the tail of the symbol sequence, and the second extended sequence ${S}_{2}^{′}$5 is added to the head of the symbol sequence to obtain an extended sequence **Ṡ***ₖ*. For example, the symbol sequence is [1 2 3 4 5 6 7 8 9 10], *L*₁ is 3, *L*₂ is 3, the first sequence is [1 2 3] (namely, a subsequence corresponding to indexes 0 to 2 (*L*₁-1) in the symbol sequence), and the second sequence is [8 9 10] (namely, a subsequence corresponding to indexes 7 (M-*L*₂) to 9 (M-1) in the symbol sequence). The first sequence is replicated to obtain a first extended sequence [1 2 3], and a second sequence is replicated to obtain a second extended sequence [8 9 10]. The first extended sequence is added to the tail of the symbol sequence, and the second extended sequence is added to the head of the symbol sequence to obtain an extended sequence [8 9 10 1 2 3 4 5 6 7 8 9 10 1 2 3].

Manner 2: Obtaining the first extended sequence and the second extended sequence based on sequence conjugation, adding the first extended sequence to a tail of the symbol sequence, and adding the second extended sequence to a head of the symbol sequence

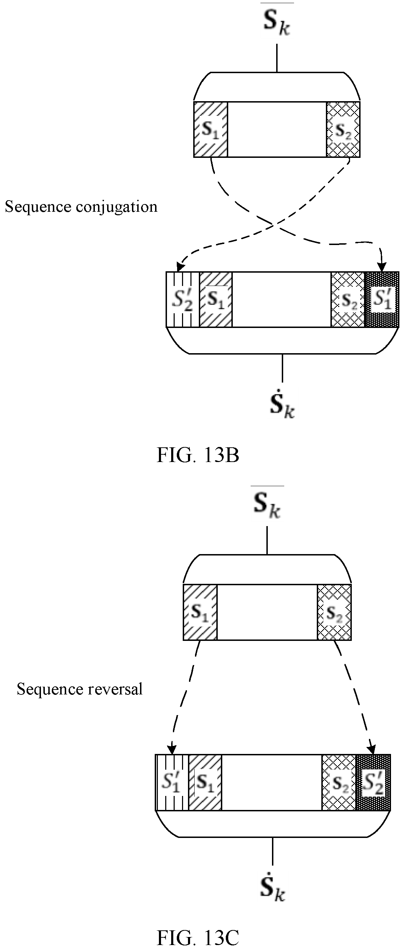

As shown in FIG. 13B, for a symbol sequence **S***ₖ*, a length of a first sequence **S**₁ in the symbol sequence is *L*₁, and a length of a second sequence **S**₂ is *L*₂. The first sequence is replicated to obtain a first extended sequence ${S}_{1}^{′}$, and the second sequence is replicated to obtain a second extended sequence ${S}_{2}^{′}$. Then, the first extended sequence ${S}_{1}^{′}$ is added to the tail of the symbol sequence, and the second extended sequence ${S}_{2}^{′}$ is added to the head of the symbol sequence to obtain an extended sequence **Ṡ***ₖ*. For example, the symbol sequence is [1+1j 2+1j 3+1j 4+1j 5+1j 6+1j 7+1j 8+1j 9+1j 10+1j], *L*₁ is 3, *L*₂ is 3, the first sequence is [1+1j 2+1j 3+1j] (namely, a subsequence corresponding to indexes 0 to 2 (*L*₁-1) in the symbol sequence), and the second sequence is [8+1j 9+1j 10+1j] (namely, a subsequence corresponding to indexes 7 (M-*L*₂) to 9 (M-1) in the symbol sequence). The first sequence is conjugated to obtain the first extended sequence, and the second sequence is conjugated to obtain the second extended sequence. The first extended sequence is added to the tail of the symbol sequence, and the second extended sequence is added to the head of the symbol sequence to obtain an extended sequence [8-1j 9-1j 10-1j 1+1j 2+1j 3+1j 4+1j 5+1j 6+1j 7+1j 8+1j 9+1j 10+1j 1-1j 2-1j 3-1j].

Manner 3: Obtaining the first extended sequence and the second extended sequence based on sequence reversal, adding the first extended sequence to a head of the symbol sequence, and adding the second extended sequence to a tail of the symbol sequence

As shown in FIG. 13C, for a symbol sequence **S***ₖ*, a length of a first sequence **S**₁ in the symbol sequence is *L*₁, and a length of a second sequence **S**₂ is *L*₂. The first sequence is reversed to obtain a first extended sequence ${S}_{1}^{′}$, and the second sequence is reversed to obtain a second extended sequence ${S}_{2}^{′}$. Then, the first extended sequence ${S}_{1}^{′}$ is added to the head of the symbol sequence, and the second extended sequence ${S}_{2}^{′}$ is added to the tail of the symbol sequence. For example, the symbol sequence is [1 2 3 4 5 6 7 8 9 10], *L*₁ is 3, *L*₂ is 3, the first sequence is [1 2 3] (namely, a subsequence corresponding to indexes 0 to 2 (*L*₁-1) in the symbol sequence), and the second sequence is [8 9 10] (namely, a subsequence corresponding to indexes 7 (M-*L*₂) to 9 (M-1) in the symbol sequence). The first sequence is reversed to obtain a first extended sequence [3 2 1], and the second sequence is reversed to obtain a second extended sequence [10 9 8]. The first extended sequence is added to the head of the symbol sequence, and the second extended sequence is added to the tail of the symbol sequence to obtain an extended sequence [3 2 1 1 2 3 4 5 6 7 8 9 10 10 9 8].

Manner 4: Obtaining the first extended sequence and the second extended sequence based on sequence reversal and sequence conjugation, adding the first extended sequence to a head of the symbol sequence, and adding the second extended sequence to a tail of the symbol sequence.

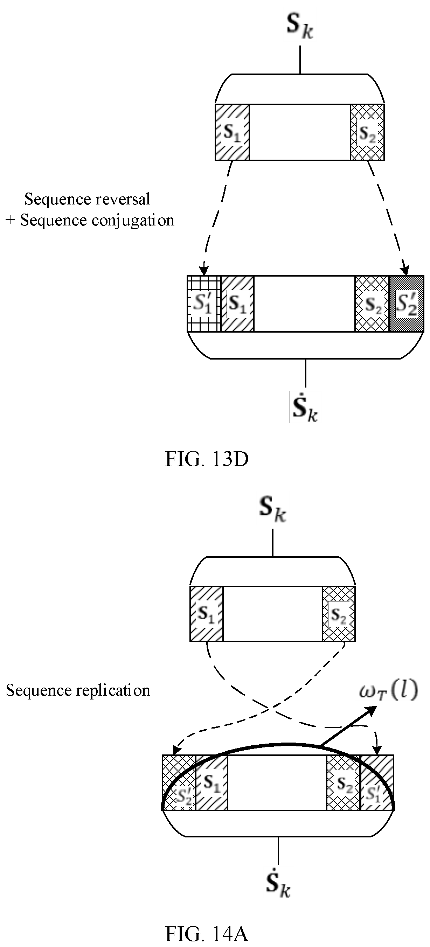

As shown in FIG. 13D, for a symbol sequence **S***ₖ*, a length of a first sequence **S**₁ in the symbol sequence is *L*₁, and a length of a second sequence **S**₂ is *L*₂. The first sequence is reversed and conjugated (in a specific application, an execution order of sequence reversal and sequence conjugation is not limited) to obtain a first extended sequence ${S}_{1}^{′}$, and the second sequence is reversed to obtain a second extended sequence ${S}_{2}^{′}$. Then, the first extended sequence ${S}_{1}^{′}$ is added to the head of the symbol sequence, and the second extended sequence ${S}_{2}^{′}$ is added to the tail of the symbol sequence. For example, the symbol sequence is [1+1j 2+1j 3+1j 4+1j 5+1j 6+1j 7+1j 8+1j 9+1j 10+1j], *L*₁ is 3, *L*₂ is 3, the first sequence is [1 2 3] (namely, a subsequence corresponding to indexes 0 to 2 (*L*₁-1) in the symbol sequence), and the second sequence is [8 9 10] (namely, a subsequence corresponding to indexes 7 (M-*L*₂) to 9 (M-1) in the symbol sequence). The first sequence is reversed and conjugated to obtain a first extended sequence [3-1j 2-1j 1-1j], and the second sequence is reversed and conjugated to obtain a second extended sequence [10-1j 9-1j 8-1j]. The first extended sequence is added to the head of the symbol sequence, and the second extended sequence is added to the tail of the symbol sequence to obtain an extended sequence [3-1j 2-1j 1-1j 1+1j 2+1j 3+1j 4+1j 5+1j 6+1j 7+1j 8+1j 9+1j 10+1j10-1j 9-1j 8-1j].

Manner 1 to Manner 4 are merely examples for description, and there may be a sequence processing manner of the first processing derived from Manner 1 to Manner 4. For example, the first extended sequence is obtained based on sequence replication, the second extended sequence is obtained based on sequence conjugation, the first extended sequence is added to the tail of the symbol sequence, and the second extended sequence is added to the head of the symbol sequence. Alternatively, the first extended sequence is obtained based on sequence conjugation, the second extended sequence is obtained based on sequence replication, the first extended sequence is added to the tail of the symbol sequence, and the second extended sequence is added to the head of the symbol sequence. Alternatively, the first extended sequence is obtained based on sequence reversal, the second extended sequence is obtained based on sequence reversal and sequence conjugation, the first extended sequence is added to the head of the symbol sequence, and the second extended sequence is added to the tail of the symbol sequence. Alternatively, the first extended sequence is obtained based on sequence reversal and sequence conjugation, the second extended sequence is obtained based on sequence reversal, the first extended sequence is added to the head of the symbol sequence, and the second extended sequence is added to the tail of the symbol sequence. Example descriptions are merely provided herein, and no specific limitation is imposed. A shape of the window function of FDSS is similar to a mountain peak (for details, refer to FIG. 12). In other words, an amplitude of the window function is high in the middle and low at both sides. In this application, a redundancy design that matches shape characteristics of the window function is introduced, that is, the first extended sequence is added to the tail or the head of the symbol sequence, and the second extended sequence is added to the head or the tail of the symbol sequence, so that degradation of the two subsequences in the symbol sequence (namely, the subsequence corresponding to the index 0 to the index *L*₁ -1 and the subsequence corresponding to the index M-*L*₂ to the index M-1) caused by FDSS processing can be alleviated, thereby improving the communication demodulation performance of the OFDM signal.

In this application, the transmitter and the receiver may agree in advance on a shift amount of the cyclic shift, the length of the first extended sequence, the length of the second extended sequence, the length (M+L) of the extended sequence, the length M of the symbol sequence, L, a relative relationship between L and M, the extension factor α, and the sequence processing manner of the first processing; or may obtain the foregoing information based on a notification message. For details, refer to the following descriptions.

If the transmitter is a terminal device, and the receiver is a network device, before step 1101 is performed, the following step is further performed.

Step 1100A: The transmitter obtains a first notification message from the receiver, where the first notification message indicates at least one of the following parameters: the shift amount of the cyclic shift, the length of the first extended sequence, the length of the second extended sequence, the length (M+L) of the extended sequence, the length M of the symbol sequence, L, the relative relationship between L and M, or the extension factor α. Specifically, the terminal device may receive the first notification message from the network device (in a specific application, the network device may be a receiver, or may be another device, which is not specifically limited herein). Alternatively, after the terminal device requests, from the network device, a parameter for generating the OFDM signal, the network device sends the first notification message to the terminal device. This is not specifically limited in this application. The first notification message may be carried in downlink control information (downlink control information, DCI) or radio resource control signaling. Example descriptions are merely provided herein, and no specific limitation is imposed.

The first notification message indicating at least one of the parameters may be understood as that the first notification message includes the parameter (for example, the length of the first extended sequence), or may be understood as that the first notification message indicates, by using another parameter (for example, a character string or an encrypted parameter), the parameter (for example, the first notification message includes C1, and the length of the first extended sequence is indicated by using the parameter C1).

In an implementation, the first notification message includes parameters of the following types for the transmitter to generate the OFDM signal.

Type 1: the shift amount of the cyclic shift, the length (M+L) of the extended sequence, the length M of the symbol sequence, the length of the first extended sequence, and/or the length of the second extended sequence

Type 2: the shift amount of the cyclic shift, the length of the symbol sequence, L, the length of the first extended sequence, and/or the length of the second extended sequence

Type 3: the shift amount of the cyclic shift, the length (M+L) of the extended sequence, L, the length of the first extended sequence, and/or the length of the second extended sequence

Type 4: the shift amount of the cyclic shift, the length (M+L) of the extended sequence, the relative relationship between L and M, the length of the first extended sequence, and/or the length of the second extended sequence

Type 5: the shift amount of the cyclic shift, the length (M+L) of the extended sequence, the extension factor α, the length of the first extended sequence, and/or the length of the second extended sequence

The foregoing types are merely an example for description. A type of the parameter included in the first notification information is not specifically limited. In addition, if the length of the first extended sequence is equal to the length of the second extended sequence, the first notification information may not indicate the length of the first extended sequence and/or the length of the second extended sequence, to reduce signaling overheads.

If the transmitter and the receiver agree in advance on the sequence processing manner of the first processing, the transmitter may construct the OFDM signal with reference to the agreement and the first notification message. If the transmitter and the receiver do not agree in advance on the sequence processing manner of the first processing, before performing step 1101, the transmitter further obtains a second notification message, where the second notification message indicates the sequence processing manner of the first processing. The second notification message and the first notification message may be the same notification message, or may be different notification messages. This is not specifically limited in this application. The second notification message may be carried in DCI or radio resource control signaling. Example descriptions are merely provided herein, and no specific limitation is imposed.

In addition, if the transmitter is a network device, and the receiver is a terminal device, the following step may be performed.

Step 1100B: The transmitter outputs (or sends) a first notification message to the receiver. Step 1100B may also be performed after step 1102. An execution sequence of the steps is not limited herein.

It should be noted that the transmitter may send the first notification message and the second notification message, so that the receiver recovers the extended sequence into the symbol sequence.

The receiver receives the first notification message. Based on the first notification message, the receiver may determine the length of the extended sequence, the length of the symbol sequence, the length of the first extended sequence, the length of the second extended sequence, and the shift amount of the cyclic shift, to determine how to demodulate the OFDM signal. In addition, the transmitter outputs the second notification message, and the receiver receives the second notification message. Based on the second notification message, the receiver may determine the sequence processing manner of the first processing, to enable demodulation of the received OFDM signal. The receiver may perform different demodulation processing based on a capability of the receiver. For example, if the capability of the receiver is limited, the receiver may recover the symbol sequence based on only middle M pieces of data in the received (M+L) pieces of data. In other words, first *L*₁ pieces of data (corresponding to the first extended sequence) or last *L*₂ pieces of data (corresponding to the second extended sequence) in the received (M+L) pieces of data are not used for recovering the symbol sequence. If the capability of the receiver is strong, the receiver may also use the first *L*₁ pieces of data or the last *L*₂ pieces of data in the received (M+L) pieces of data, to implement more accurate recovery of the symbol sequence.

Step 1102: The transmitter outputs (or sends) the OFDM signal. Correspondingly, the receiver receives the OFDM signal.

Optionally, the transmitter further outputs an FDSS parameter, so that the receiver recovers the transmitted symbol sequence based on the received OFDM signal.

Step 1103: The receiver demodulates the OFDM signal to obtain the symbol sequence.

Specifically, the receiver performs analog-to-digital conversion, CP removal, serial-to-parallel conversion module, N-point DFT, subcarrier demapping, equalization (during which impacts of both a channel and FDSS on the extended sequence are removed; and it is assumed that an equalizer outputs an M-length sequence in this step), and an inverse cyclic shift to obtain an estimate of the symbol sequence.

In this application, the extended sequence is obtained after the first processing is performed on the symbol sequence, and the length of the extended sequence is greater than the length of the symbol sequence. Therefore, after the first processing, redundancy (namely, the subsequences) is introduced to the symbol sequence. After FDSS processing is performed on the extended sequence, subcarrier mapping and inverse Fourier transform are sequentially performed to obtain the OFDM signal. Based on the OFDM signal, in an ISAC scenario, FDSS can improve performance of detecting a to-be-sensed target, and the first processing can alleviate a loss of communication demodulation performance of the OFDM signal caused by FDSS.

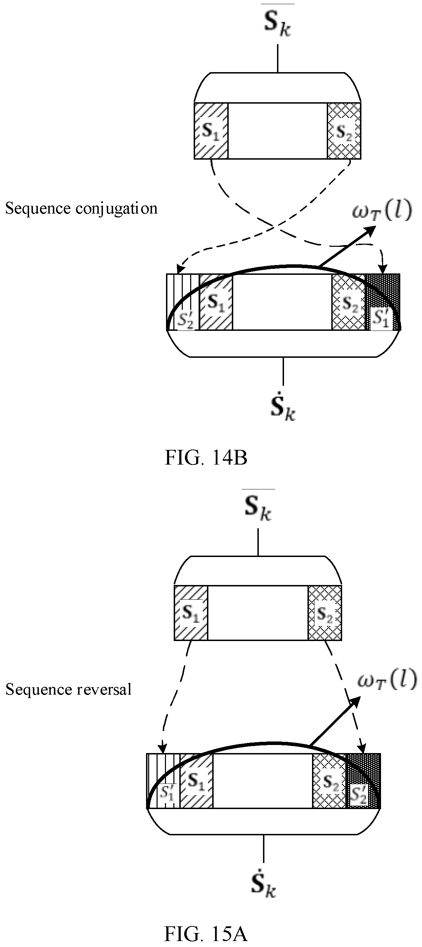

To better describe the solutions in this application, the following provides specific descriptions with reference to FIG. 14A and FIG. 14B. As shown in FIG. 14A, for a symbol sequence **S***ₖ* (obtained by performing a cyclic shift with a shift amount of *c*₀)*,* a length of a first sequence **S**₁ in the symbol sequence is *L*₁, and a length of a second sequence **S**₂ is *L*₂. The first sequence is replicated to obtain a first extended sequence ${S}_{1}^{′}$, and the second sequence is replicated to obtain a second extended sequence ${S}_{2}^{′}$. Then, the first extended sequence ${S}_{1}^{′}$ is added to the tail of the symbol sequence, and the second extended sequence ${S}_{2}^{′}$ is added to the head of the symbol sequence to obtain the extended sequence **Ṡ***ₖ*. The extended sequence in FIG. 14A may be understood with reference to the following Formula 12: ${\dot{S}}_{k} \left(l\right) = \left\{\begin{matrix}{S}_{k} \left(M-{L}_{2}+l\right) , \\ {S}_{k} \left(l-{L}_{2}\right) , \\ {S}_{k} \left(l-M-{L}_{2}\right) ,\end{matrix} \begin{matrix}if 0 \leq l \leq {L}_{2} - 1 \\ if {L}_{2} \leq l \leq M + {L}_{2} - 1 \\ if M + {L}_{2} \leq l \leq {N}_{sc} - 1\end{matrix}\right.$ Formula 12

*Ṡₖ*(*l*) is an *l^{th}* element in **Ṡ***ₖ,* **Ṡ***ₖ* is the extended sequence, and *N*_{sc} is M *+ L.* As shown in FIG. 14B, for a symbol sequence **S***ₖ*, a length of a first sequence **S**₁ in the symbol sequence is *L*₁, and a length of a second sequence **S**₂ is *L*₂. The first sequence is replicated to obtain a first extended sequence ${S}_{1}^{′}$, and the second sequence is replicated to obtain a second extended sequence ${S}_{2}^{′}$. Then, the first extended sequence ${S}_{1}^{′}$ is added to the tail of the symbol sequence, and the second extended sequence ${S}_{2}^{′}$ is added to the head of the symbol sequence to obtain the extended sequence **Ṡ***ₖ*. The extended sequence in FIG. 14B may be understood with reference to the following Formula 13: ${\dot{S}}_{k} \left(l\right) = \left\{\begin{matrix}{S}_{k}^{∗} \left(M-{L}_{2}+l\right) , \\ {S}_{k} \left(l-{L}_{2}\right) , \\ {S}_{k}^{∗} \left(l-M-{L}_{2}\right) ,\end{matrix} \begin{matrix}if 0 \leq l \leq {L}_{2} - 1 \\ if {L}_{2} \leq l \leq M + {L}_{2} - 1 \\ if M + {L}_{2} \leq l \leq {N}_{sc} - 1\end{matrix}\right.$ Formula 13 ${S}_{k}^{∗}$ is a conjugate sequence of *Sₖ.*

**Ṡ***ₖ* is used as an input to FDSS, and after FDSS processing, **S̃***ₖ* is obtained, which is represented by the following Formula 14: ${{S}^{˜}}_{k} \left(l\right) = {\dot{S}}_{k} \left(l\right) {ω}_{T} \left(l\right)$ Formula 14

*ω_{T}*(*l*)*,* for *l =* 0,1, ··· , *N*_{sc} - 1, represents a coefficient of an FDSS window function. FIG. 14A and FIG. 14B illustrate *ω_{T}*(*l*).

Through the first processing, each piece of data in *L*₁ *+ L*₂ pieces of data at the head and the tail of **S***ₖ* is additionally transmitted once by using one additional subcarrier. This helps improve demodulation performance of the *L*₁ *+ L*₂ pieces of data at the head and the tail of **S***ₖ*.

The following describes estimation/recovery of **S***ₖ*. It is assumed that a CP is sufficient. CP removal, N-point DFT, and subcarrier demapping are sequentially performed on the received OFDM signal to obtain a frequency-domain signal *Yₖ*(*l*), *l* = 0,1, ··· , *N*_{sc} - 1 of length *N*_{sc}. It is assumed that a channel response on an *l^{th}* subcarrier is *C*(*l*), and noise is *ϕ*(*l*). Then, *Yₖ*(*l*) satisfies the following Formula 15: ${Y}_{k} \left(l\right) = C \left(l\right) {{S}^{˜}}_{k} \left(l\right) + ϕ \left(l\right) = C \left(l\right) {ω}_{T} \left(l\right) {\dot{S}}_{k} \left(l\right) + ϕ \left(l\right) = H \left(l\right) {\dot{S}}_{k} \left(l\right) + ϕ \left(l\right)$ Formula 15

*H*(*l*) *= C*(*l*)*ω_{T}*(*l*) represents a joint frequency domain response of FDSS and the channel.

For *M -* (*L*₁ *+ L*₂) pieces of data in *Sₖ*(*γ*)*, y* = *L*₁, ··· , *M - L*₂ - 1, with reference to Formula 15 and Formula 12 or Formula 13, Formula 16 may be obtained: ${Y}_{k} \left(γ+{L}_{2}\right) = H \left(γ+{L}_{2}\right) {S}_{k} \left(γ\right) + ϕ \left(γ+{L}_{2}\right)$ Formula 16

*Sₖ*(*γ*)*, y* = *L*₁, ··· , *M - L*₂ - 1 may be recovered by using zero-forcing (zero-forcing, ZF) equalization or a minimum mean square error (minimum mean square error, MMSE) equalizer. For example, when ZF equalization is used, the following Formula 17 is satisfied: ${\hat{S}}_{k} \left(γ\right) = \frac{{Y}_{k} \left(γ+{L}_{2}\right)}{H \left(γ+{L}_{2}\right)}$ Formula 17

*Ŝₖ*(*γ*) represents an estimate of *Sₖ*(*γ*). For example, when MMSE equalization is used, the following Formula 18 is satisfied: ${\hat{S}}_{k} \left(γ\right) = \frac{{Y}_{k} \left(γ+{L}_{2}\right) H * \left(γ+{L}_{2}\right)}{{\left|H\left(γ+{L}_{2}\right)\right|}^{2} + {σ}_{ϕ}^{2}}$ Formula 18 ${σ}_{ϕ}^{2}$ represents a noise variance.

There are two solutions for recovering *L* pieces of data in *Sₖ*(*γ*), *γ* ∈ {0, ··· , *L*₁ *-* 1, *M - L*₂, ··· *, M -* 1} . A first solution relies only on the *L* pieces of data in *Yₖ*(*l*), *l* ∈ {*L*₂, *L*₂ + 1, ··· , *L*₂ *+ L*₁ - *1, M*, ··· , *M + L*₂ - 1}. A second solution further uses *L* pieces of data corresponding to the first extended sequence and the second extended sequence, in addition to the L pieces of data. In the first solution, one piece of received data is used to recover one piece of transmitted data. In the second solution, two pieces of received data are used to recover one piece of transmitted data. The second solution achieves better performance than the first solution, but has higher implementation complexity. If the capability of the receiver is limited, the first recovery solution may be selected. If the capability of the receiver is strong, the second recovery solution may be selected. The following describes the two solutions.

First solution: Using only *Yₖ*(*L*₂ *+ γ*) to recover *Sₖ*(*γ*), where *y* = 0, ··· , *L*₁ - 1 or *γ = M - L*₂, ··· , *M* - 1

With reference to Formula 15 and Formula 12 or Formula 13, the following Formula 19 may be obtained: ${Y}_{k} \left({L}_{2}+γ\right) = H \left({L}_{2}+γ\right) {S}_{k} \left(γ\right) + ϕ \left({L}_{2}+γ\right)$ Formula 19

Because Formula 19 is the same as Formula 16, *Ŝₖ*(*γ*) is obtained through ZF or MMSE equalization as shown in Formula 17 or Formula 18. Details are not described herein. Refer to Formula 17 or Formula 18 for understanding.

### Second solution:

For the *L*₁ pieces of data in *Sₖ*(*γ*)*, γ* = 0, ··· , *L*₁ - 1, if the manner shown in Formula 12 is used, with reference to Formula 15, the following Formula 20 may be obtained: $\left[\begin{matrix}{Y}_{k} \left({L}_{2}+γ\right) \\ {Y}_{k} \left(M+{L}_{2}+γ\right)\end{matrix}\right] = \left[\begin{matrix}H \left({L}_{2}+γ\right) \\ H \left(M+{L}_{2}+γ\right)\end{matrix}\right] {S}_{k} \left(γ\right) + \left[\begin{matrix}ϕ \left({L}_{2}+γ\right) \\ ϕ \left(M+{L}_{2}+γ\right)\end{matrix}\right]$ Formula 20

An estimate *Ŝₖ*(*γ*) of *Sₖ*(*γ*) may be obtained according to Formula 21, where **P**(*γ*) is a vector with one row and two columns. ${\hat{S}}_{k} \left(γ\right) = P \left(γ\right) \left[\begin{matrix}{Y}_{k} \left({L}_{2}+γ\right) \\ {Y}_{k} \left(M+{L}_{2}+γ\right)\end{matrix}\right]$ Formula 21

**P**(*γ*) may be designed according to a ZF criterion or an MMSE criterion. For example, according to the ZF criterion, **P**(*γ*) satisfies the following Formula 22: $P \left(γ\right) = {\left({{H}^{˜}}^{H}\left(γ\right){H}^{˜}\left(γ\right)\right)}^{- 1} {{H}^{˜}}^{H} \left(γ\right)$ Formula 22 ${H}^{˜} \left(γ\right) = \left[\begin{matrix}H \left({L}_{2}+γ\right) \\ H \left(M+{L}_{2}+γ\right)\end{matrix}\right]$*,* and a superscript H represents a Hermitian (Hermitian) transpose. For example, according to the MMSE criterion, **P**(*γ*) satisfies the following Formula 23: $P \left(γ\right) = {\left({{H}^{˜}}^{H}\left(γ\right){H}^{˜}\left(γ\right)+{σ}_{ϕ}^{2}\right)}^{- 1} {{H}^{˜}}^{H} \left(γ\right)$ Formula 23

For the *L*₂ pieces of data in *Sₖ*(*γ*), *γ* = *M -L*₂, ···, *M* - 1, if the manner shown in Formula 12 is used, with reference to Formula 15, the following Formula 24 may be obtained: $\left[\begin{matrix}{Y}_{k} \left(γ-\left(M-{L}_{2}\right)\right) \\ {Y}_{k} \left(γ+{L}_{2}\right)\end{matrix}\right] = \left[\begin{matrix}H \left(γ-\left(M-{L}_{2}\right)\right) \\ H \left(γ+{L}_{2}\right)\end{matrix}\right] {S}_{k} \left(γ\right) + \left[\begin{matrix}ϕ \left(γ-\left(M-{L}_{2}\right)\right) \\ ϕ \left(γ+{L}_{2}\right)\end{matrix}\right]$ Formula 24

An estimate *Ŝₖ*(*γ*) of *Sₖ*(*γ*) may be obtained according to Formula 25, where **Q**(*γ*) is a vector with one row and two columns. ${\hat{S}}_{k} \left(γ\right) = Q \left(γ\right) \left[\begin{matrix}{Y}_{k} \left(γ-\left(M-{L}_{2}\right)\right) \\ {Y}_{k} \left(γ+{L}_{2}\right)\end{matrix}\right]$ Formula 25

**Q**(*γ*) may be designed according to a ZF criterion or an MMSE criterion. For example, according to the ZF criterion, **Q**(*γ*) satisfies the following Formula 26: $Q \left(γ\right) = {\left({\dot{H}}^{H}\left(γ\right)\dot{H}\left(γ\right)\right)}^{- 1} {\dot{H}}^{H} \left(γ\right)$ Formula 26 $\dot{H} \left(γ\right) = \left[\begin{matrix}H \left(γ-\left(M-{L}_{2}\right)\right) \\ H \left(γ+{L}_{2}\right)\end{matrix}\right]$. For example, according to the MMSE criterion, Q(y) satisfies the following Formula 27: $Q \left(γ\right) = {\left({\dot{H}}^{H}\left(γ\right)\dot{H}\left(γ\right)+{σ}_{ϕ}^{2}\right)}^{- 1} {\dot{H}}^{H} \left(γ\right)$ Formula 27

For the *L*₁ pieces of data in *Sₖ*(*κ*), *γ* = 0, ··· , *L*₁ - 1, if the manner shown in Formula 13 is used, with reference to Formula 15, the following Formula 28 may be obtained: $\left[\begin{matrix}{Y}_{k} \left({L}_{2}+γ\right) \\ {Y}_{k}^{∗} \left(M+{L}_{2}+γ\right)\end{matrix}\right] = \left[\begin{matrix}H \left({L}_{2}+γ\right) \\ {H}^{∗} \left(M+{L}_{2}+γ\right)\end{matrix}\right] {S}_{k} \left(γ\right) + \left[\begin{matrix}ϕ \left({L}_{2}+γ\right) \\ {ϕ}^{∗} \left(M+{L}_{2}+γ\right)\end{matrix}\right]$ Formula 28

*Ŝₖ*(*γ*) may be obtained according to Formula 29, where *γ*P*γ*y) is a vector with one row and two columns. ${\hat{S}}_{k} \left(γ\right) = P \left(γ\right) \left[\begin{matrix}{Y}_{k} \left({L}_{2}+γ\right) \\ {Y}_{k}^{∗} \left(M+{L}_{2}+γ\right)\end{matrix}\right]$ Formula 29

**P**(*γ*) may be designed according to a ZF criterion or an MMSE criterion. For example, according to the ZF criterion, **P**(*γ*) satisfies the following Formula 30: $P \left(γ\right) = {\left({{H}^{˜}}^{H}\left(γ\right){H}^{˜}\left(γ\right)\right)}^{- 1} {{H}^{˜}}^{H} \left(γ\right)$ Formula 30 ${H}^{˜} \left(γ\right) = \left[\begin{matrix}H \left({L}_{2}+γ\right) \\ {H}^{∗} \left(M+{L}_{2}+γ\right)\end{matrix}\right]$*,* and a superscript H represents a Hermitian transpose. For example, according to the MMSE criterion, P(y) satisfies the following Formula 31: $P \left(γ\right) = {\left({{H}^{˜}}^{H}\left(γ\right){H}^{˜}\left(γ\right)+{σ}_{ϕ}^{2}\right)}^{- 1} {{H}^{˜}}^{H} \left(γ\right)$ Formula 31

For the *L*₂ pieces of data in *Sₖ*(*γ*)*, γ = M* - *L*₂, ··· , *M* - 1, if the manner shown in Formula 13 is used, with reference to Formula 15, the following Formula 32 may be obtained: $\left[\begin{matrix}{Y}_{k}^{∗} \left(γ-\left(M-{L}_{2}\right)\right) \\ {Y}_{k} \left(γ+{L}_{2}\right)\end{matrix}\right] = \left[\begin{matrix}{H}^{∗} \left(γ-\left(M-{L}_{2}\right)\right) \\ H \left(γ+{L}_{2}\right)\end{matrix}\right] {S}_{k} \left(γ\right) + \left[\begin{matrix}{ϕ}^{∗} \left(γ-\left(M-{L}_{2}\right)\right) \\ ϕ \left(γ+{L}_{2}\right)\end{matrix}\right]$ Formula 32

*Ŝₖ*(*γ*) may be obtained according to Formula 33, where **Q(***γ*) is a vector with one row and two columns. ${\hat{S}}_{k} \left(γ\right) = Q \left(γ\right) \left[\begin{matrix}{Y}_{k}^{∗} \left(γ-\left(M-{L}_{2}\right)\right) \\ {Y}_{k} \left(γ+{L}_{2}\right)\end{matrix}\right]$ Formula 33

**Q**(*γ*) may be designed according to a ZF criterion or an MMSE criterion. For example, according to the ZF criterion, Q(y) satisfies the following Formula 34: $Q \left(γ\right) = {\left({\dot{H}}^{H}\left(γ\right)\dot{H}\left(γ\right)\right)}^{- 1} {\dot{H}}^{H} \left(γ\right)$ Formula 34 $\dot{H} \left(γ\right) = \left[\begin{matrix}{H}^{∗} \left(γ-\left(M-{L}_{2}\right)\right) \\ H \left(γ+{L}_{2}\right)\end{matrix}\right]$. For example, according to the MMSE criterion, **Q**(*γ*) satisfies the following Formula 35: $Q \left(γ\right) = {\left({\dot{H}}^{H}\left(γ\right)\dot{H}\left(γ\right)+{σ}_{ϕ}^{2}\right)}^{- 1} {\dot{H}}^{H} \left(γ\right)$ Formula 35

After a sequence estimate {*Ŝₖ*(*γ*)} is obtained, a -*c*₀-point cyclic shift needs to be further performed to obtain an estimate of the original symbol sequence. The operation may be performed with reference to Formula 36: ${\hat{S}}_{k} \left[\left(γ-{c}_{0}\right) mod M\right]$ Formula 36

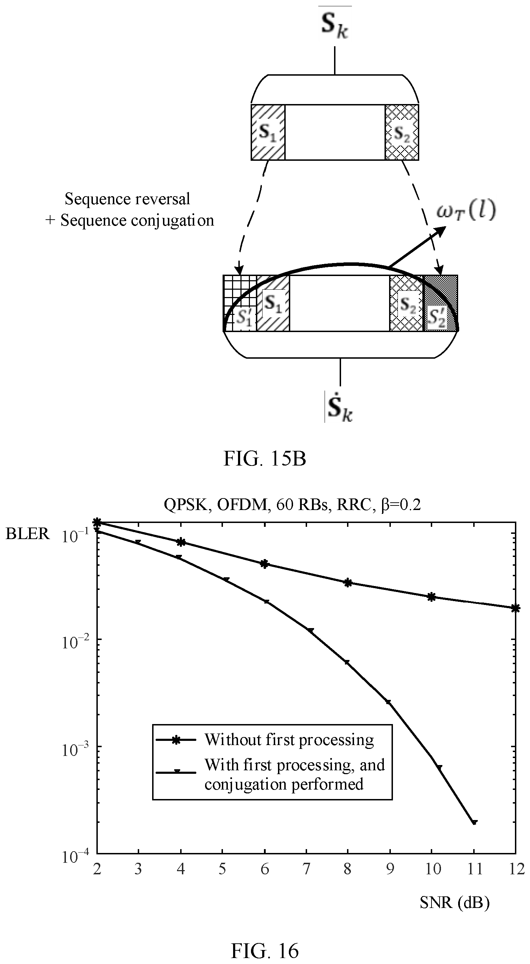

To better describe the solutions in this application, the following provides specific descriptions with reference to FIG. 15A and FIG. 15B. As shown in FIG. 15A, for a symbol sequence **S***ₖ*, a length of a first sequence **S**₁ in the symbol sequence is *L*₁, and a length of a second sequence **S**₂ is *L*₂. The first sequence is reversed to obtain a first extended sequence ${S}_{1}^{′}$*,* and the second sequence is reversed to obtain a second extended sequence ${S}_{2}^{′}$. Then, the first extended sequence ${S}_{1}^{′}$ is added to the head of the symbol sequence, and the second extended sequence ${S}_{2}^{′}$ is added to the tail of the symbol sequence to obtain the extended sequence **Ṡ***ₖ*. The extended sequence in FIG. 15A may be understood with reference to the following Formula 37: ${\dot{S}}_{k} \left(l\right) = \left\{\begin{matrix}{S}_{k} \left({L}_{1}-1-l\right) , \\ {S}_{k} \left(l-{L}_{1}\right) , \\ {S}_{k} \left(2M+{L}_{1}-1-l\right) ,\end{matrix} \begin{matrix}if 0 \leq l \leq {L}_{1} - 1 \\ if {L}_{1} \leq l \leq M + {L}_{1} - 1 \\ if M + {L}_{1} \leq l \leq {N}_{sc} - 1\end{matrix}\right.$ Formula 37

As shown in FIG. 15B, for a symbol sequence **S***ₖ*, a length of a first sequence **S**₁ in the symbol sequence is *L*₁, and a length of a second sequence **S**₂ is *L*₂. The first sequence is reversed and conjugated (in a specific application, an execution order of sequence reversal and sequence conjugation is not limited) to obtain a first extended sequence ${S}_{1}^{′}$, and the second sequence is reversed to obtain a second extended sequence ${S}_{2}^{′}$. Then, the first extended sequence ${S}_{1}^{′}$ is added to the head of the symbol sequence, and the second extended sequence ${S}_{2}^{′}$ is added to the tail of the symbol sequence to obtain the extended sequence **Ṡ***ₖ*. The extended sequence in FIG. 15B may be understood with reference to the following Formula 38: ${\dot{S}}_{k} \left(l\right) = \left\{\begin{matrix}{S}_{k}^{∗} \left({L}_{1}-1-l\right) , \\ {S}_{k} \left(l-{L}_{1}\right) , \\ {S}_{k}^{∗} \left(2M+{L}_{1}-1-l\right) ,\end{matrix} \begin{matrix}if 0 \leq l \leq {L}_{1} - 1 \\ if {L}_{1} \leq l \leq M + {L}_{1} - 1 \\ if M + {L}_{1} \leq l \leq {N}_{sc} - 1\end{matrix}\right.$ Formula 38

*Ṡₖ*(*l*) is an *l*^{th} element in **Ṡ***ₖ*.

Through the first processing, each piece of data in *L*₁ *+ L*₂ pieces of data at the head and the tail of **S***ₖ* is additionally transmitted once by using one additional subcarrier. This helps improve demodulation performance of the *L*₁ *+ L*₂ pieces of data at the head and the tail of **S***ₖ*.

The following describes estimation/recovery of **S***ₖ*. It is assumed that a CP is sufficient. CP removal, N-point DFT, and subcarrier demapping are sequentially performed on the received OFDM signal to obtain a frequency-domain signal *Yₖ*(*l*), *l* = 0,1, ··· , *N*_{sc} - 1 of length *N*_{sc}. It is assumed that a channel response on an *l*^{th} subcarrier is *C*(*l*), and noise is *φ*(*l*)*.* Then, *Yₖ*(*l*) may be determined according to Formula 15.

For *M -* (*L*₁ *+ L*₂) pieces of data in *Sₖ*(*γ*)*, γ* = *L*₁, ··· , *M - L*₂ - 1, with reference to Formula 15, Formula 39 may be obtained: ${Y}_{k} \left(γ+{L}_{1}\right) = H \left(γ+{L}_{1}\right) {S}_{k} \left(γ\right) + ϕ \left(γ+{L}_{1}\right)$ Formula 39

*Sₖ*(*γ*)*, γ* = *L*₁, ··· , *M - L*₂ - 1 may be recovered by using ZF equalization or the MMSE equalizer. For example, when ZF equalization is used, the following Formula 40 is satisfied: ${\hat{S}}_{k} \left(γ\right) = \frac{{Y}_{k} \left(γ+{L}_{1}\right)}{H \left(γ+{L}_{1}\right)}$ Formula 40

*Ŝₖ*(*γ*) represents an estimate of *Sₖ*(*γ*). For example, when MMSE equalization is used, the following Formula 41 is satisfied: ${\hat{S}}_{k} \left(γ\right) = \frac{{Y}_{k} \left(γ+{L}_{1}\right) H * \left(γ+{L}_{1}\right)}{{\left|H\left(γ+{L}_{1}\right)\right|}^{2} + {σ}_{ϕ}^{2}}$ Formula 41 ${σ}_{ϕ}^{2}$ represents a noise variance.

There are two solutions for recovering *L* pieces of data in *Sₖ*(*γ*)*, γ* ∈ {0, ··· , *L*₁ *- 1, M - L*₂, ··· *, M -* 1} . A first solution relies only on the *L* pieces of data in *Yₖ*(*l*), *l* ∈ {*L*₁, *L*₁ *+* 1, ··· ,2*L*₁ - *1, M - L*₂ *+ L*₁, *··· , M + L*₁ *-* 1}. A second solution further uses *L* pieces of data corresponding to the first extended sequence and the second extended sequence, in addition to the *L* pieces of data. In the first solution, one piece of received data is used to recover one piece of transmitted data. In the second solution, two pieces of received data are used to recover one piece of transmitted data. The second solution achieves better performance than the first solution, but has higher implementation complexity. If the capability of the receiver is limited, the first recovery solution may be selected. If the capability of the receiver is strong, the second recovery solution may be selected. The following describes the two solutions.

First solution: Using only *Yₖ*(*L*₁ + *γ*) to recover *Sₖ*(*γ*), where *y* = 0, ··· , *L*₁ - 1 or *γ = M* - *L*₂, ··· , *M* - 1

With reference to Formula 15 and Formula 37 or Formula 38, the following Formula 42 may be obtained: ${Y}_{k} \left({L}_{1}+γ\right) = H \left({L}_{1}+γ\right) {S}_{k} \left(γ\right) + ϕ \left({L}_{1}+γ\right)$ Formula 42

Because Formula 42 is the same as Formula 39, *Ŝₖ*(*γ*) may be obtained through ZF or MMSE equalization as shown in Formula 40 or Formula 41. Details are not described herein. Refer to Formula 40 or Formula 41 for understanding.

### Second solution:

For the *L*₁ pieces of data in *Sₖ*(*γ*)*, γ* = 0, ··· , *L*₁ - 1, if the manner shown in Formula 37 is used, with reference to Formula 15, the following Formula 43 may be obtained: $\left[\begin{matrix}{Y}_{k} \left({L}_{1}+γ\right) \\ {Y}_{k} \left({L}_{1}-γ-1\right)\end{matrix}\right] = \left[\begin{matrix}H \left({L}_{1}+γ\right) \\ H \left({L}_{1}-γ-1\right)\end{matrix}\right] {S}_{k} \left(γ\right) + \left[\begin{matrix}ϕ \left({L}_{1}+γ\right) \\ ϕ \left({L}_{1}-γ-1\right)\end{matrix}\right]$ Formula 43

*Ŝₖ*(*γ*) may be obtained according to Formula 44, where P(y) is a vector with one row and two columns. ${\hat{S}}_{k} \left(γ\right) = P \left(γ\right) \left[\begin{matrix}{Y}_{k} \left({L}_{1}+γ\right) \\ {Y}_{k} \left({L}_{1}-γ-1\right)\end{matrix}\right]$ Formula 44

**P**(*γ*) may be designed according to a ZF criterion or an MMSE criterion. For example, according to the ZF criterion, P(y) satisfies the following Formula 45: $P \left(γ\right) = {\left({{H}^{˜}}^{H}\left(γ\right){H}^{˜}\left(γ\right)\right)}^{- 1} {{H}^{˜}}^{H} \left(γ\right)$ Formula 45 ${H}^{˜} \left(γ\right) = \left[\begin{matrix}H \left({L}_{1}+γ\right) \\ H \left({L}_{1}-γ-1\right)\end{matrix}\right]$, and a superscript H represents a Hermitian transpose. For example, according to the MMSE criterion, **P**(*γ*) satisfies the following Formula 46: $P \left(γ\right) = {\left({{H}^{˜}}^{H}\left(γ\right){H}^{˜}\left(γ\right)+{σ}_{ϕ}^{2}\right)}^{- 1} {{H}^{˜}}^{H} \left(γ\right)$ Formula 46

For the *L*₂ pieces of data in *Sₖ*(*γ*)*, γ = M - L*₂, ··· , *M* - 1, if the manner shown in Formula 37 is used, with reference to Formula 15, the following Formula 47 may be obtained: $\left[\begin{matrix}{Y}_{k} \left(γ+{L}_{1}\right) \\ {Y}_{k} \left(2M+{L}_{1}-1-γ\right)\end{matrix}\right] = \left[\begin{matrix}H \left(γ+{L}_{1}\right) \\ H \left(2M+{L}_{1}-1-γ\right)\end{matrix}\right] {S}_{k} \left(γ\right) + \left[\begin{matrix}ϕ \left(γ+{L}_{1}\right) \\ ϕ \left(2M+{L}_{1}-1-γ\right)\end{matrix}\right]$ Formula 47

*Ŝₖ*(*γ*) may be obtained according to Formula 48, where **Q**(*γ*) is a vector with one row and two columns. ${\hat{S}}_{k} \left(γ\right) = Q \left(γ\right) \left[\begin{matrix}{Y}_{k} \left(γ+{L}_{1}\right) \\ {Y}_{k} \left(2M+{L}_{1}-1-γ\right)\end{matrix}\right]$ Formula 48

**Q**(*γ*) may be designed according to a ZF criterion or an MMSE criterion. For example, according to the ZF criterion, *γ*Q*γ*y) satisfies the following Formula 49: $Q \left(γ\right) = {\left({\dot{H}}^{H}\left(γ\right)\dot{H}\left(γ\right)\right)}^{- 1} {\dot{H}}^{H} \left(γ\right)$ Formula 49 $\dot{H} \left(γ\right) = \left[\begin{matrix}H \left(γ+{L}_{1}\right) \\ H \left(2M+{L}_{1}-1-γ\right)\end{matrix}\right]$. For example, according to the MMSE criterion, **Q**(*γ*) satisfies the following Formula 50: $Q \left(γ\right) = {\left({\dot{H}}^{H}\left(γ\right)\dot{H}\left(γ\right)+{σ}_{ϕ}^{2}\right)}^{- 1} {\dot{H}}^{H} \left(γ\right)$ Formula 50

For the *L*₁ pieces of data in *Sₖ*(*γ*)*, y* = 0, ··· , *L*₁ - 1, if the manner shown in Formula 38 is used, with reference to Formula 15, the following Formula 51 may be obtained: $\left[\begin{matrix}{Y}_{k} \left({L}_{1}+γ\right) \\ {Y}_{k}^{∗} \left({L}_{1}-γ-1\right)\end{matrix}\right] = \left[\begin{matrix}H \left({L}_{1}+γ\right) \\ {H}^{∗} \left({L}_{1}-γ-1\right)\end{matrix}\right] {S}_{k} \left(γ\right) + \left[\begin{matrix}ϕ \left({L}_{1}+γ\right) \\ {ϕ}^{∗} \left({L}_{1}-γ-1\right)\end{matrix}\right]$ Formula 51

*Ŝₖ*(*γ*) may be obtained according to Formula 52, where *γ*P*γ*y) is a vector with one row and two columns. ${\hat{S}}_{k} \left(γ\right) = P \left(γ\right) \left[\begin{matrix}{Y}_{k} \left({L}_{1}+γ\right) \\ {Y}_{k}^{∗} \left({L}_{1}-γ-1\right)\end{matrix}\right]$ Formula 52

**P**(*γ*) may be designed according to a ZF criterion or an MMSE criterion. For example, according to the ZF criterion, **P**(*γ*) satisfies the following Formula 53: $P \left(γ\right) = {\left({{H}^{˜}}^{H}\left(γ\right){H}^{˜}\left(γ\right)\right)}^{- 1} {{H}^{˜}}^{H} \left(γ\right)$ Formula 53 ${H}^{˜} \left(γ\right) = \left[\begin{matrix}H \left({L}_{1}+γ\right) \\ {H}^{∗} \left({L}_{1}-γ-1\right)\end{matrix}\right]$, and a superscript H represents a Hermitian transpose. For example, according to the MMSE criterion, **P**(*γ*) satisfies the following Formula 54: $P \left(γ\right) = {\left({{H}^{˜}}^{H}\left(γ\right){H}^{˜}\left(γ\right)+{σ}_{ϕ}^{2}\right)}^{- 1} {{H}^{˜}}^{H} \left(γ\right)$ Formula 54

For the *L*₂ pieces of data in *Sₖ*(*γ*)*, γ* = *M -L*₂, ··· *, M* - 1, if the manner shown in Formula 38 is used, with reference to Formula 54, the following Formula 55 may be obtained: $\left[\begin{matrix}{Y}_{k} \left(γ+{L}_{1}\right) \\ {Y}_{k}^{∗} \left(2M+{L}_{1}-1-γ\right)\end{matrix}\right] = \left[\begin{matrix}H \left(γ+{L}_{1}\right) \\ H * \left(2M+{L}_{1}-1-γ\right)\end{matrix}\right] {S}_{k} \left(γ\right) + \left[\begin{matrix}ϕ \left(γ+{L}_{1}\right) \\ ϕ * \left(2M+{L}_{1}-1-γ\right)\end{matrix}\right]$ Formula 55

*Ŝₖ*(*γ*) may be obtained according to Formula 56, where **Q**(*γ*) is a vector with one row and two columns. ${\hat{S}}_{k} \left(γ\right) = Q \left(γ\right) \left[\begin{matrix}{Y}_{k} \left(γ+{L}_{1}\right) \\ {Y}_{k}^{∗} \left(2M+{L}_{1}-1-γ\right)\end{matrix}\right]$ Formula 56

**Q**(*γ*) may be designed according to a ZF criterion or an MMSE criterion. For example, according to the ZF criterion, **Q**(*γ*) satisfies the following Formula 57: $Q \left(γ\right) = {\left({\dot{H}}^{H}\left(γ\right)\dot{H}\left(γ\right)\right)}^{- 1} {\dot{H}}^{H} \left(γ\right)$ Formula 57 $\dot{H} \left(γ\right) = \left[\begin{matrix}H \left(γ+{L}_{1}\right) \\ {H}^{∗} \left(2M+{L}_{1}-1-γ\right)\end{matrix}\right]$. For example, according to the MMSE criterion, **Q**(*γ*) satisfies the following Formula 58: $Q \left(γ\right) = {\left({\dot{H}}^{H}\left(γ\right)\dot{H}\left(γ\right)+{σ}_{ϕ}^{2}\right)}^{- 1} {\dot{H}}^{H} \left(γ\right)$ Formula 58

After a sequence estimate {*Ŝₖ(y)}* is obtained, a -*c*₀-point cyclic shift needs to be further performed to obtain an estimate of the original symbol sequence. Refer to Formula 36 for understanding.

To better illustrate improvement in the demodulation performance of the OFDM signal with FDSS achieved by the first processing in this application, the following uses a simulation result for description. *ω_{T}*(*l*) is an RRC with a roll-off factor of 0.2 and a length of 720, that is, *N*_{sc} = 720, **S***ₖ* is a QPSK symbol sequence, and *c*₀ = 0. The OFDM signal is transmitted through an AWGN channel. FIG. 16 shows demodulation BER performance with and without the first processing. "conj" corresponding to a curve marked with a lower triangle in the diagram indicates that the sequence processing operation of the first processing includes a sequence conjugation operation. It can be learned from FIG. 16 that the first processing improves the demodulation performance, and the sequence conjugate operation does not affect the performance.

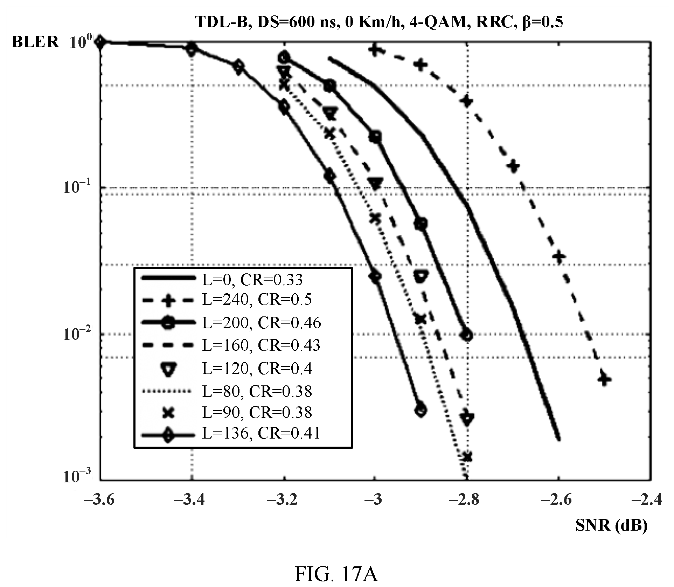

It is assumed that *ω_{T}*(*l*) is an RRC with a roll-off factor of 0.5 and a length of 720, **S***ₖ* is a QPSK symbol sequence, and *c*₀ = 0. A static tapped delay line (tapped delay line, TDL)-B channel with a delay of 600 ns is assumed. An ideal channel estimate is assumed, and low-density parity-check codes are used for channel coding. In a solution without bandwidth extension (used as a baseline), a coding code rate (code rate, CR) is 1/3. Under a condition of an aligned communication capacity (or under a condition of an aligned quantity of transmitted information bits), in a solution with bandwidth extension, the coding code rate is $\frac{1}{3} \left(1+α\right)$. In this case, a maximum value of *α* is 0.5 (because *α* ≤ *θθ* = 0.5). Therefore, if *α* = 0.5, the coding code rate increases from 1/3 to 0.5. FIG. 17A shows a demodulation block error rate (block error rate, BLER) in a solution with the first processing for different values of *α* corresponding to different values of L, where ${L}_{1} = {L}_{2} = \frac{{N}_{sc} α}{2 \left(1+α\right)}$. It can be learned from FIG. 17A that the demodulation performance is optimal when the value of L is appropriate. As shown in FIG. 17A, when L=136 and CR=0.41, the demodulation performance is optimal; and when L=240 and CR=0.5, the demodulation performance is the worst.

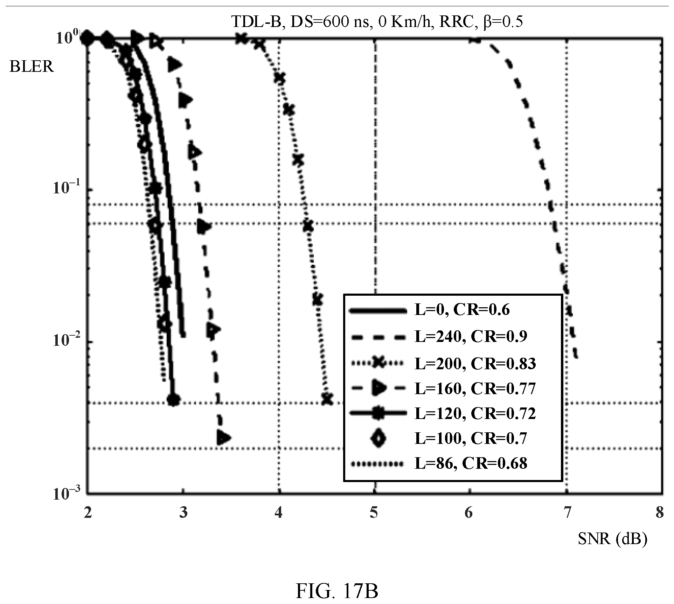

In FIG. 17B, except that the baseline code rate is changed to 2/3, other parameters are the same as the parameters in FIG. 17A. FIG. 17B shows the demodulation BLER in the solution with the first processing for different values of *α* corresponding to different values of L.

It can be learned from FIG. 17A and FIG. 17B that, for some values of α, the solution with the first processing performs worse than the baseline solution (namely, the solution without the first processing). For example, when *α* = *θ*, the code rate is increased greatly, and an increase in demodulation SNR caused by the increase in code rate outweighs a decrease in demodulation SNR caused by the first processing. For another example, when *α* = 0, although the code rate is the lowest, data on subcarriers whose energy is reduced by FDSS and to which redundancy is not introduced exhibits poor demodulation performance. Based on this, it can be learned that an optimal value of *α* lies between 0 and *θ*.

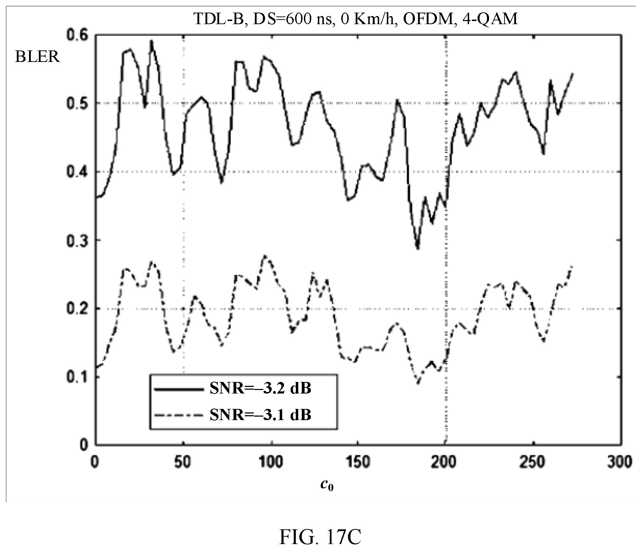

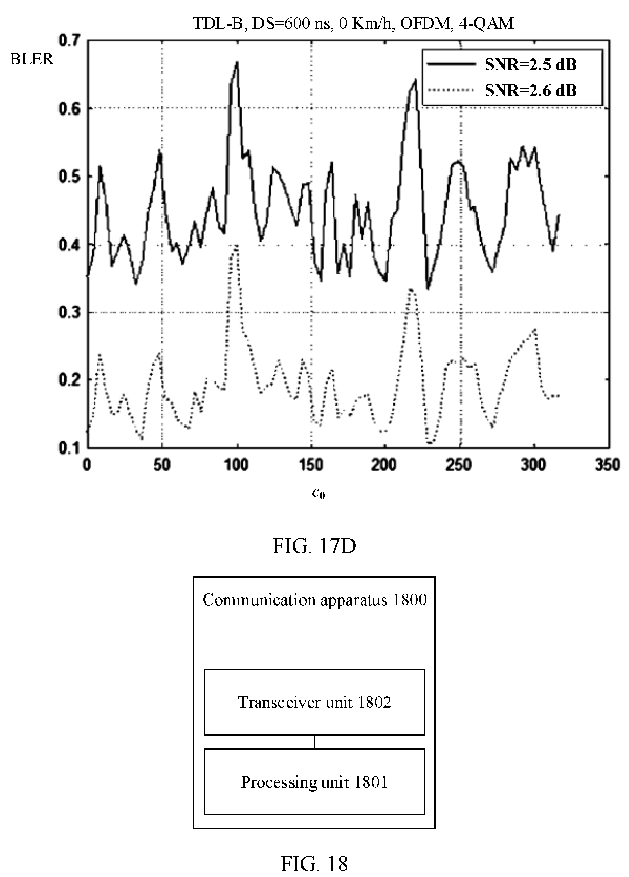

FIG. 17C shows the demodulation BLERs under different shift amounts *c*₀ when the signal-to-noise ratios are -3.1 dB and -3.2 dB. The horizontal axis represents the shift amount, and the vertical axis represents the BLER. L=136, and other parameters are the same as the parameters in FIG. 17A. FIG. 17D shows the demodulation BLERs under different shift amounts when the signal-to-noise ratios are 2.5 dB and 2.6 dB. L=86, and other parameters are the same as the parameters in FIG. 17B. It can be learned that the BLER performance varies with different shift amounts. For example, as shown in FIG. 17C, BLER performance at *c*₀ = 184 is better than BLER performance at *c*₀ = 0. This is because that M coded symbols in the symbol sequence of length M have different anti-interference capabilities. Therefore, the OFDM demodulation performance may be improved by selecting an appropriate value of *c*₀.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

When an integrated unit is used, FIG. 18 is a possible example block diagram of a communication apparatus according to an embodiment of this application. As shown in FIG. 18, a communication apparatus 1800 may include a processing unit 1801 and a transceiver unit 1802. The processing unit 1801 is configured to control and manage an action of the communication apparatus 1800. The transceiver unit 1802 is configured to support communication between the communication apparatus 1800 and another device. Optionally, the transceiver unit 1802 may include a receiving unit and/or a sending unit that are respectively configured to perform a receiving operation and a sending operation. Optionally, the communication apparatus 1800 may further include a storage unit, configured to store program code and/or data of the communication apparatus 1800. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the communication apparatus may be the foregoing transmitter, receiver, or the like.

In an embodiment, when the communication apparatus 1800 is a transmitter, the processing unit 1801 is configured to obtain an OFDM signal, where the OFDM signal is obtained by preprocessing a symbol sequence. The preprocessing includes frequency domain spectrum shaping FDSS and first processing. The first processing extends the symbol sequence to obtain an extended sequence, and the first processing is performed before FDSS. The transceiver unit 1802 is configured to output the OFDM signal.

In another embodiment, the communication apparatus 1800 is a receiver. The transceiver unit 1802 is configured to receive an OFDM signal, where the OFDM signal is obtained by preprocessing a symbol sequence. The preprocessing includes frequency domain spectrum shaping FDSS and first processing. The first processing extends the symbol sequence to obtain an extended sequence, and the first processing is performed before FDSS. The processing unit 1801 is configured to demodulate the OFDM signal to obtain the symbol sequence.

In an optional manner, the preprocessing further includes performing a cyclic shift on the symbol sequence, where the cyclic shift is performed before the first processing.

In an optional manner, the first processing extending the symbol sequence to obtain the extended sequence includes extending the symbol sequence of length M based on an extension factor *α* to obtain the extended sequence of length (M+L), where $α = \frac{L}{M}$.

In an optional manner, *α* is determined based on at least one of the following:
an MCS corresponding to the OFDM signal, or a first factor *θ*, where a value of the first factor is related to a window function of FDSS.

In an optional manner, the first processing extending the symbol sequence to obtain the extended sequence includes extending the symbol sequence of length M based on an extension length *L* to obtain the extended sequence of length (M+L), where both M and L are positive integers, and L does not exceed M.

In an optional manner, *L* is determined based on at least one of the following:
the MCS corresponding to the OFDM signal, M, or the first factor *θ*, where the value of the first factor is related to the window function of FDSS.

In an optional manner, the extended sequence includes a first extended sequence of length *L*₁ and a second extended sequence of length *L*₂. The first extended sequence is obtained by performing sequence processing on a first sequence in the symbol sequence, and the first sequence is a subsequence corresponding to an index 0 to an index *L*₁-1 in the symbol sequence. The second extended sequence is obtained by performing sequence processing on a second sequence in the symbol sequence, and the second sequence is a subsequence corresponding to an index M-*L*₂ to an index M-1 in the symbol sequence.

In an optional manner, *L*₁ is equal to *L*₂.

In an optional manner, a sequence processing manner of the first processing includes one of the following:
obtaining the first extended sequence and the second extended sequence based on sequence replication, adding the first extended sequence to a tail of the symbol sequence, and adding the second extended sequence to a head of the symbol sequence; or
obtaining the first extended sequence and the second extended sequence based on sequence conjugation, adding the first extended sequence to a tail of the symbol sequence, and adding the second extended sequence to a head of the symbol sequence; or
obtaining the first extended sequence and the second extended sequence based on sequence reversal, adding the first extended sequence to a head of the symbol sequence, and adding the second extended sequence to a tail of the symbol sequence; or
obtaining the first extended sequence and the second extended sequence based on sequence reversal and sequence conjugation, adding the first extended sequence to a head of the symbol sequence, and adding the second extended sequence to a tail of the symbol sequence.

In an optional manner, the transceiver unit 1802 further obtains or sends a first notification message, where the first notification message indicates at least one of the following parameters: a shift amount of the cyclic shift, a length of the first extended sequence, a length of the second extended sequence, the length (M+L) of the extended sequence, the length M of the symbol sequence, L, a relative relationship between L and M, or the extension factor *α*.

In an optional manner, the transceiver unit 1802 further obtains or sends a second notification message, where the second notification message indicates the sequence processing manner of the first processing.

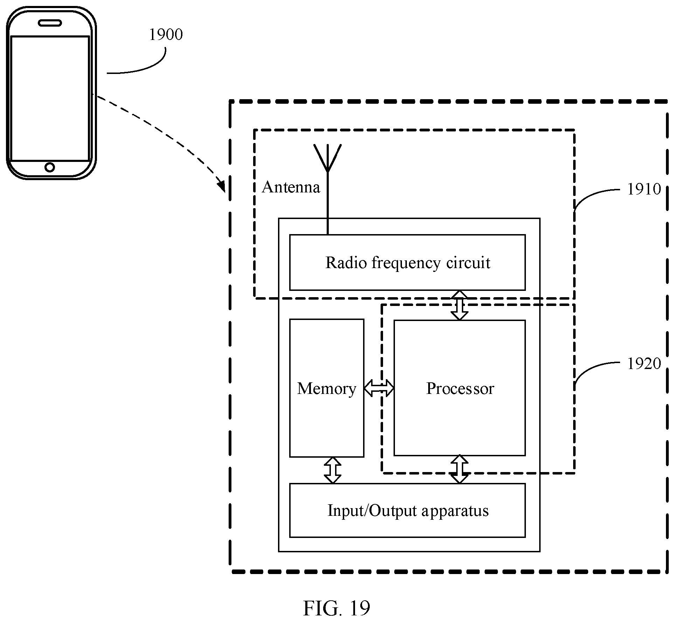

In addition, FIG. 19 is a simplified diagram of a structure of a terminal device according to this application. For ease of understanding and figure illustration, an example in which the terminal is a mobile phone is used in FIG. 19. As shown in FIG. 19, the terminal includes a processor, a memory, a radio frequency circuit, an antenna, and an input/output apparatus.

The processor is mainly configured to: process a communication protocol and communication data, control the terminal device, execute a software program, process data of the software program, and the like.

The memory is mainly configured to store the software program and data.

The radio frequency circuit is mainly configured to: perform conversion between a baseband signal and a radio frequency signal, and process the radio frequency signal.

The antenna is mainly configured to send and receive a radio frequency signal in a form of an electromagnetic wave.

The input/output apparatus, such as a touchscreen, a display, or a keyboard, is mainly configured to receive data input by a user and output data to the user.

It should be noted that some types of terminal devices may have no input/output apparatus.

When data needs to be sent, the processor performs baseband processing on the to-be-sent data, and then outputs a baseband signal to the radio frequency circuit. After performing radio frequency processing on the baseband signal, the radio frequency circuit sends a radio frequency signal in a form of an electromagnetic wave to the outside through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

For ease of description, only one memory and one processor are shown in FIG. 19. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver unit of the terminal device, and the processor that has a processing function may be considered as a processing unit of the terminal device.

As shown in FIG. 19, a terminal 1900 includes a transceiver unit 1910 and a processing unit 1920. The transceiver unit 1910 may also be referred to as a transceiver, a transceiver machine, a transceiver apparatus, or the like. The processing unit 1920 may also be referred to as a processor, a processing board, a processing module, a processing apparatus, or the like.

Optionally, a component configured to implement the receiving function in the transceiver unit 1910 may be considered as a receiving unit, and a component configured to implement the sending function in the transceiver unit 1910 may be considered as a sending unit. That is, the transceiver unit 1910 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmitter circuit, or the like.

It should be understood that, the transceiver unit 1910 is configured to perform a sending operation and a receiving operation of the terminal device in the foregoing method embodiments, and the processing unit 1920 is configured to perform operations other than the receiving and sending operations on the terminal device in the foregoing method embodiments.

When the terminal device is a chip, the chip includes the transceiver unit and the processing unit (processor). The transceiver unit may be an input/output circuit or a communication interface, for example, an I/O interface. The processing unit is a processor, a microprocessor, an integrated circuit, or a logic circuit integrated on the chip. The transceiver unit, the processing unit, and the memory may be integrated on a first chip, for example, a modem or a system on chip SoC. The radio frequency circuit may be located in a second chip, for example, a radio frequency front end (Front-End).

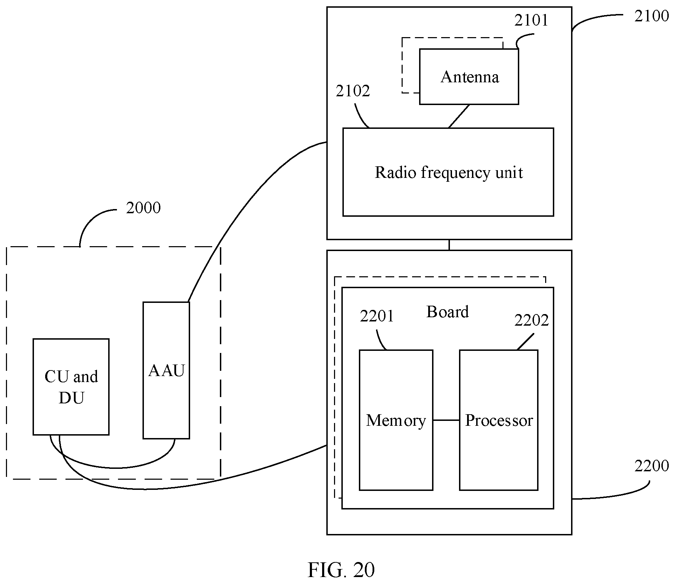

This application further provides a network device. FIG. 20 is a diagram of a structure of a network device 2000 according to an embodiment of this application. The network device 2000 may be applied to the system shown in FIG. 1. For example, the network device 2000 may be the network device in the system shown in FIG. 1, and is configured to perform the functions of the network device in the foregoing method embodiments. It should be understood that the following is merely an example. In a future communication system, the network device may have another form and composition.

For example, in a 5G communication system, the network device 2000 may include a CU, a DU, and an AAU. In comparison with a network device in an LTE communication system that includes one or more radio frequency units, for example, a remote radio unit (remote radio unit, RRU) and one or more building baseband units (building baseband units, BBUs), a non-real-time part of an original BBU is split off and redefined as the CU, which is responsible for processing a non-real-time protocol and service, some physical layer processing functions of the BBU are combined with an original RRU and a passive antenna into the AAU, and remaining functions of the BBU are redefined as the DU, which is responsible for processing a physical layer protocol and a real-time service. In short, the CU and the DU are distinguished based on real-time performance of processed content, and the AAU is a combination of the RRU and the antenna.

The CU, the DU, and the AAU may be deployed separately or together. Therefore, there may be a plurality of network deployment forms. A possible deployment form, as shown in FIG. 20, is consistent with that of a conventional 4G network device. The CU and the DU are deployed on same hardware. It should be understood that FIG. 20 is merely an example, and constitutes no limitation on the protection scope of this application. For example, a deployment form may alternatively be that DUs are deployed in a BBU equipment room, CUs or DUs are deployed together, or CUs are centralized at a higher level.

An AAU 2100 may implement a transceiver function corresponding to the transceiver unit 1802 in FIG. 18. Optionally, the AAU 2100 may also be referred to as a transceiver machine, a transceiver circuit, a transceiver, or the like, and may include at least one antenna 2101 and a radio frequency unit 2102. Optionally, the AAU 2100 may include a receiving unit and a sending unit. The receiving unit may correspond to a receiver (or referred to as a receiving machine or a receiving circuit), and the sending unit may correspond to a transmitter (or referred to as a transmitter machine or a transmitter circuit). CU and DU 2200 may implement an internal processing function corresponding to the processing unit 1801 in FIG. 18. Optionally, the CU and DU 2200 may control the network device or the like, and may be referred to as controllers. The AAU, the CU, and the DU may be physically disposed together, or may be physically disposed separately.

In addition, the network device is not limited to the form shown in FIG. 20, and may alternatively be in another form, for example, includes a BBU and an adaptive radio unit (adaptive radio unit, ARU), or includes a BBU and an AAU; or may be customer premises equipment (customer premises equipment, CPE), or may be in another form. This is not limited in this application.

In an example, the CU and DU 2200 may include one or more boards. A plurality of boards may jointly support a radio access network (for example, an LTE network) of a single access standard, or may respectively support radio access networks (for example, an LTE network, a 5G network, a future network, or another network) of different access standards. The CU and DU 2200 further includes a memory 2201 and a processor 2202. The memory 2201 is configured to store necessary instructions and data. The processor 2202 is configured to control the network device to perform a necessary action, for example, is configured to control the network device to perform an operation procedure related to the network device in the foregoing method embodiments. The memory 2201 and the processor 2202 may serve one or more boards. In other words, a memory and a processor may be disposed on each board. Alternatively, a plurality of boards may share the same memory and the same processor. In addition, a necessary circuit may further be disposed on each board.

It should be understood that the network device 2000 shown in FIG. 20 can implement functions of the network device in the method embodiment in FIG. 11. Operations and/or functions of units in the network device 2000 are separately intended to implement corresponding procedures performed by the network device in the foregoing method embodiments of this application. To avoid repetition, detailed descriptions are appropriately omitted herein. The structure of the network device shown in FIG. 20 is merely a possible form, and should not constitute any limitation on embodiments of this application. In this application, a possibility that there may be a network device structure in another form in the future is not excluded.

The CU and DU 2200 may be configured to perform an action described in the foregoing method embodiments and implemented inside the network device, and the AAU 2100 may be configured to perform an action of sending from the network device to the terminal device and an action of receiving from the terminal device in the foregoing method embodiments. For details, refer to the descriptions in the foregoing method embodiments. Details are not described herein again.

An embodiment of this application further provides a communication system. The communication system includes a terminal device and a network device. The terminal device is configured to perform all or some of the steps performed by the terminal device in the embodiment shown in FIG. 11. The network device is configured to perform all or some of the steps performed by the network device in the embodiment shown in FIG. 11.

Based on the foregoing embodiments, an embodiment of this application further provides a computer-readable storage medium. The computer-readable storage medium stores instructions. When the instructions are executed, the method in any one of the foregoing embodiments is implemented. The computer storage medium may be a volatile storage medium, or may be a non-volatile storage medium. The readable storage medium may include any medium that can store program code, for example, a USB flash drive, a removable hard disk drive, a read-only memory, a random access memory, a magnetic disk, or an optical disc.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may be implemented in a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general purpose computer, a dedicated computer, an embedded processor, or a processor of another programmable data processing apparatus to generate a machine, so that the instructions executed by a computer or the processor of any other programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or another programmable apparatus to generate computer-implemented processing. Therefore, the instructions executed on the computer or another programmable apparatus provide steps for implementing a specific function in one or more procedures in the flowcharts and/or in one or more blocks in the block diagrams.

## Claims

1. A communication method, comprising:
obtaining an orthogonal frequency division multiplexing OFDM signal, wherein the OFDM signal is obtained by preprocessing a symbol sequence, the preprocessing comprises frequency domain spectrum shaping FDSS and first processing, the first processing extends the symbol sequence to obtain an extended sequence, and the first processing is performed before the FDSS; and
outputting the OFDM signal.

2. The method according to claim 1, wherein the preprocessing further comprises performing a cyclic shift on the symbol sequence, and the cyclic shift is performed before the first processing.

3. The method according to claim 1 or 2, wherein that the first processing extends the symbol sequence to obtain the extended sequence comprises extending the symbol sequence of length M based on an extension factor *α* to obtain the extended sequence of length (M+L), and $α = \frac{L}{M}$.

4. The method according to claim 3, wherein *α* is determined based on at least one of the following:
a modulation and coding scheme MCS corresponding to the OFDM signal, or a first factor *θ*, wherein
a value of the first factor is related to a window function of the FDSS.

5. The method according to any one of claims 1 to 4, wherein that the first processing extends the symbol sequence to obtain the extended sequence comprises extending the symbol sequence of length M based on an extension length *L* to obtain the extended sequence of length (M+L).

6. The method according to any one of claims 3 to 5, wherein *L* is determined based on at least one of the following:
the modulation and coding scheme MCS corresponding to the OFDM signal, M, or the first factor *θ*, wherein
the value of the first factor is related to the window function of the FDSS.

7. The method according to any one of claims 1 to 6, wherein the extended sequence comprises a first extended sequence of length *L*₁, a second extended sequence of length *L*₂, and the symbol sequence of length M; and
the first extended sequence is obtained by performing sequence processing on a first sequence in the symbol sequence, and the first sequence is a subsequence corresponding to an index 0 to an index *L*₁-1 in the symbol sequence; and the second extended sequence is obtained by performing sequence processing on a second sequence in the symbol sequence, and the second sequence is a subsequence corresponding to an index M-*L*₂ to an index M-1 in the symbol sequence.

8. The method according to claim 7, wherein *L*₁ is equal to *L*₂.

9. The method according to claim 7 or 8, wherein a sequence processing manner of the first processing comprises one of the following:
obtaining the first extended sequence and the second extended sequence based on sequence replication, adding the first extended sequence to a tail of the symbol sequence, and adding the second extended sequence to a head of the symbol sequence; or
obtaining the first extended sequence and the second extended sequence based on sequence conjugation, adding the first extended sequence to a tail of the symbol sequence, and adding the second extended sequence to a head of the symbol sequence; or
obtaining the first extended sequence and the second extended sequence based on sequence reversal, adding the first extended sequence to a head of the symbol sequence, and adding the second extended sequence to a tail of the symbol sequence; or
obtaining the first extended sequence and the second extended sequence based on sequence reversal and sequence conjugation, adding the first extended sequence to a head of the symbol sequence, and adding the second extended sequence to a tail of the symbol sequence.

10. The method according to any one of claims 7 to 9, further comprising:
obtaining or outputting a first notification message, wherein the first notification message indicates at least one of the following parameters:
a shift amount of the cyclic shift, a length of the first extended sequence, a length of the second extended sequence, the length (M+L) of the extended sequence, the length M of the symbol sequence, L, a relative relationship between L and M, or the extension factor *α*.

11. The method according to claim 10, further comprising:
obtaining or outputting a second notification message, wherein the second notification message indicates the sequence processing manner of the first processing.

12. A communication method, comprising:
receiving an orthogonal frequency division multiplexing OFDM signal, wherein the OFDM signal is obtained by preprocessing a symbol sequence, the preprocessing comprises frequency domain spectrum shaping FDSS and first processing, the first processing extends the symbol sequence to obtain an extended sequence, and the first processing is performed before the FDSS; and
demodulating the OFDM signal to obtain the symbol sequence.

13. The method according to claim 12, wherein the preprocessing further comprises performing a cyclic shift on the symbol sequence, and the cyclic shift is performed before the first processing.

14. The method according to claim 12 or 13, wherein that the first processing extends the symbol sequence to obtain the extended sequence comprises extending the symbol sequence of length M based on an extension factor *α* to obtain the extended sequence of length (M+L), and $α = \frac{L}{M}$.

15. The method according to claim 14, wherein *α* is determined based on at least one of the following:
a modulation and coding scheme MCS corresponding to the OFDM signal, or a first factor *θ*, wherein
a value of the first factor is related to a window function of the FDSS.

16. The method according to any one of claims 12 to 15, wherein that the first processing extends the symbol sequence to obtain the extended sequence comprises extending the symbol sequence of length M based on an extension length *L* to obtain the extended sequence of length (M+L).

17. The method according to any one of claims 14 to 16, wherein *L* is determined based on at least one of the following:
the modulation and coding scheme MCS corresponding to the OFDM signal, M, or the first factor *θ*, wherein
the value of the first factor is related to the window function of the FDSS.

18. The method according to any one of claims 12 to 17, wherein the extended sequence comprises a first extended sequence of length *L*₁, a second extended sequence of length *L*₂, and the symbol sequence of length M; and
the first extended sequence is obtained by performing sequence processing on a first sequence in the symbol sequence, and the first sequence is a subsequence corresponding to an index 0 to an index *L*₁-1 in the symbol sequence; and the second extended sequence is obtained by performing sequence processing on a second sequence in the symbol sequence, and the second sequence is a subsequence corresponding to an index M-*L*₂ to an index M-1 in the symbol sequence.

19. The method according to claim 18, wherein *L*₁ is equal to *L*₂.

20. The method according to claim 18 or 19, wherein a sequence processing manner of the first processing comprises one of the following:
obtaining the first extended sequence and the second extended sequence based on sequence replication, adding the first extended sequence to a tail of the symbol sequence, and adding the second extended sequence to a head of the symbol sequence; or
obtaining the first extended sequence and the second extended sequence based on sequence conjugation, adding the first extended sequence to a tail of the symbol sequence, and adding the second extended sequence to a head of the symbol sequence; or
obtaining the first extended sequence and the second extended sequence based on sequence reversal, adding the first extended sequence to a head of the symbol sequence, and adding the second extended sequence to a tail of the symbol sequence; or
obtaining the first extended sequence and the second extended sequence based on sequence reversal and sequence conjugation, adding the first extended sequence to a head of the symbol sequence, and adding the second extended sequence to a tail of the symbol sequence.

21. The method according to any one of claims 18 to 20, further comprising:
obtaining or outputting a first notification message, wherein the first notification message indicates at least one of the following parameters:
a shift amount of the cyclic shift, a length of the first extended sequence, a length of the second extended sequence, the length (M+L) of the extended sequence, the length M of the symbol sequence, L, a relative relationship between L and M, or the extension factor *α*.

22. The method according to claim 21, further comprising:
obtaining or outputting a second notification message, wherein the second notification message indicates the sequence processing manner of the first processing.

23. A communication apparatus, comprising at least one processor and a memory, wherein
the memory is configured to store a computer program or data; and
the at least one processor is configured to run a part or all of the computer program or data, to enable the method according to any one of claims 1 to 22 to be performed.

24. A computer-readable storage medium, wherein the computer-readable storage medium stores instructions, and when the instructions are executed by a computer, the method according to any one of claims 1 to 22 is performed.

25. A computer program product comprising a computer program or instructions, wherein when the computer program or the instructions are run on a computer, the method according to any one of claims 1 to 22 is performed.
